(19) Europäisches Patentamt
European Patent Office
Office européen des brevets

(11) **EP 4 398 402 A1**

(12) **EUROPEAN PATENT APPLICATION**
published in accordance with Art. 153(4) EPC

(43) Date of publication:
10.07.2024 Bulletin 2024/28

(21) Application number: 22864302.9

(22) Date of filing: 19.08.2022

(51) International Patent Classification (IPC):
$H01M\ 50/403^{(2021.01)}$    $H01M\ 4/13^{(2010.01)}$
$H01M\ 4/139^{(2010.01)}$    $H01M\ 50/42^{(2021.01)}$
$H01M\ 50/443^{(2021.01)}$    $H01M\ 50/46^{(2021.01)}$

(52) Cooperative Patent Classification (CPC):
H01M 4/13; H01M 4/139; H01M 50/403;
H01M 50/42; H01M 50/443; H01M 50/46;
Y02E 60/10; Y02P 70/50

(86) International application number:
PCT/JP2022/031438

(87) International publication number:
WO 2023/032718 (09.03.2023 Gazette 2023/10)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 31.08.2021 JP 2021141960

(71) Applicant: Zeon Corporation
Tokyo 100-8246 (JP)

(72) Inventors:
• UMESATO Toshiyuki
Tokyo 100-8246 (JP)
• TAKAGI Kazuki
Tokyo 100-8246 (JP)

(74) Representative: Maiwald GmbH
Elisenhof
Elisenstraße 3
80335 München (DE)

(54) **COMPOSITION FOR NONAQUEOUS SECONDARY BATTERY ADHESIVE LAYER, NONAQUEOUS SECONDARY BATTERY ADHESIVE LAYER AND METHOD FOR PRODUCING SAME, LAMINATE FOR NONAQUEOUS SECONDARY BATTERY AND METHOD FOR PRODUCING SAME, AND NONAQUEOUS SECONDARY BATTERY**

(57) Provided is a composition for a non-aqueous secondary battery adhesive layer with which it is possible to form an adhesive layer for a non-aqueous secondary battery that strongly adheres battery members to each other even through pressing at normal temperature. The composition for a non-aqueous secondary battery adhesive layer contains a first particulate polymer and a second particulate polymer differing from the first particulate polymer. The first particulate polymer has a core-shell structure including a core portion and a shell portion at least partially covering an outer surface of the core portion. A polymer of the core portion and the second particulate polymer each include a (meth)acrylate monomer unit including a chain alkyl group having a carbon number of 4 or more. When a proportion constituted by the (meth)acrylate monomer unit including a chain alkyl group having a carbon number of 4 or more in the first particulate polymer is taken to be A mass%, a proportion constituted by the (meth)acrylate monomer unit including a chain alkyl group having a carbon number of 4 or more in the second particulate polymer is taken to be B mass%, proportional content of the first particulate polymer among total mass of the first particulate polymer and the second particulate polymer is taken to be X mass%, and proportional content of the second particulate polymer among total mass of the first particulate polymer and the second particulate polymer is taken to be Y mass%, a value calculated by formula (1): $(AX + BY)/(X + Y)$, is 75 mass% or more.

**(Cont. next page)**

# FIG. 1

**Description**

TECHNICAL FIELD

The present disclosure relates to a composition for a non-aqueous secondary battery adhesive layer, an adhesive layer for a non-aqueous secondary battery and method of producing the same, a laminate for a non-aqueous secondary battery and method of producing the same, and a non-aqueous secondary battery.

BACKGROUND

Non-aqueous secondary batteries (hereinafter, also referred to as "secondary batteries") such as lithium ion secondary batteries have characteristics such as compact size, light weight, high energy density, and the ability to be repeatedly charged and discharged, and are used in a wide variety of applications. A secondary battery generally includes battery members such as a positive electrode, a negative electrode, and a separator that isolates the positive electrode and the negative electrode from each other and prevents short-circuiting between the positive and negative electrodes.

Battery members provided with an adhesive layer in order to improve adhesiveness between battery members have been used in secondary batteries. Specifically, electrodes that further include an adhesive layer formed on an electrode substrate in which an electrode mixed material layer is provided on a current collector and separators that include an adhesive layer formed on a separator substrate have been used as battery members. Such an adhesive layer is typically formed by supplying a composition for a non-aqueous secondary battery adhesive layer (hereinafter, also referred to as a "composition for an adhesive layer") in the form of a slurry containing a binder component onto a substrate such as an electrode substrate or a separator substrate, and then drying the composition.

In recent years, attempts have been made to improve compositions for adhesive layers and methods of forming adhesive layers (adhesive materials) using such compositions for adhesive layers from a viewpoint of strongly adhering battery members to each other while also causing a secondary battery to display excellent battery characteristics and a viewpoint of increasing secondary battery production efficiency.

For example, Patent Literature (PTL) 1 discloses a composition for an adhesive layer that contains organic particles having a core-shell structure, a thixotropic agent, and water and that satisfies specific properties. According to PTL 1, an adhesive layer can be formed well by ejecting this composition for an adhesive layer as fine droplets by an inkjet method, and a substrate and an adherend can be strongly adhered via this adhesive layer.

CITATION LIST

Patent Literature

PTL 1: WO2020/045246A1

SUMMARY

(Technical Problem)

However, it would be beneficial for the composition for an adhesive layer of the conventional technique described above to cause even better adhesion of battery members to each other even in a situation in which pressure bonding is performed by pressing at normal temperature when the battery members are pressure bonded to each other via an adhesive layer formed from the composition for an adhesive layer in order to produce a laminate. In other words, there is room for further improvement of the composition for an adhesive layer of the conventional technique described above in terms of increasing adhesiveness through pressing at normal temperature of an adhesive layer that is formed from the composition for an adhesive layer.

Accordingly, one object of the present disclosure is to provide a composition for a non-aqueous secondary battery adhesive layer with which it is possible to form an adhesive layer for a non-aqueous secondary battery that strongly adheres battery members to each other even through pressing at normal temperature.

Another object of the present disclosure is to provide an adhesive layer for a non-aqueous secondary battery that can strongly adhere battery members to each other even through pressing at normal temperature and also to provide a method of producing this adhesive layer for a non-aqueous secondary battery.

Another object of the present disclosure is to provide a laminate for a non-aqueous secondary battery having excellent adhesiveness of battery members to each other and also to provide a method of producing this laminate for a non-aqueous secondary battery.

Another object of the present disclosure is to provide a non-aqueous secondary battery having excellent adhesiveness of battery members to each other.

(Solution to Problem)

The inventors made extensive studies with the aim of solving the problem set forth above. The inventors discovered that the problem set forth above can be solved through a composition for a non-aqueous secondary battery adhesive layer that contains a first particulate polymer and a second particulate polymer differing from the first particulate polymer and that includes a specific monomer unit in a desired proportion. In this manner, the inventors completed the present disclosure.

Specifically, the present disclosure aims to solve the problem set forth above, and a presently disclosed composition for a non-aqueous secondary battery adhesive layer comprises: a first particulate polymer; and a second particulate polymer differing from the first particulate polymer, wherein the first particulate polymer has a core-shell structure including a core portion and a shell portion at least partially covering an outer surface of the core portion, a polymer of the core portion and the second particulate polymer each include a (meth)acrylate monomer unit including a chain alkyl group having a carbon number of 4 or more, and when a proportion constituted by the (meth)acrylate monomer unit including a chain alkyl group having a carbon number of 4 or more in the first particulate polymer is taken to be A mass%, a proportion constituted by the (meth)acrylate monomer unit including a chain alkyl group having a carbon number of 4 or more in the second particulate polymer is taken to be B mass%, proportional content of the first particulate polymer among total mass of the first particulate polymer and the second particulate polymer is taken to be X mass%, and proportional content of the second particulate polymer among total mass of the first particulate polymer and the second particulate polymer is taken to be Y mass%, a value calculated by formula (1), shown below:

$$(AX + BY)/(X + Y) \cdots (1)$$

is 75 mass% or more.

With the composition for a non-aqueous secondary battery adhesive layer set forth above, it is possible to form an adhesive layer for a non-aqueous secondary battery that strongly adheres battery members to each other even through pressing at normal temperature.

Note that the "second particulate polymer differing from the first particulate polymer" that is referred to in the present specification differs in terms of at least one of chemical composition and particle structure, and preferably differs in terms of at least particle structure.

A "monomer unit" of a polymer referred to in the present specification is a "repeating unit that can be derived from the monomer and that is included in a polymer obtained using that monomer".

The term "(meth)acrylate" as used in the present specification refers to "acrylate" and/or "methacrylate".

The term "(meth)acrylate including a chain alkyl group having a carbon number of 4 or more" as used in the present specification refers to a (meth)acrylate in which a chain alkyl group having a carbon number of 4 or more is bonded to a non-carbonyl oxygen atom of the (meth)acrylate.

The term "normal temperature" as used in the present specification refers to a temperature within a range of not lower than 0°C and not higher than 35°C.

In the presently disclosed composition for a non-aqueous secondary battery adhesive layer, it is preferable that the polymer of the core portion has a glass-transition temperature of -20°C or lower and the second particulate polymer has a glass-transition temperature of -15°C or lower.

When the polymer of the core portion and the second particulate polymer have glass-transition temperatures that are not higher than the upper limits set forth above, it is possible to form an adhesive layer for a non-aqueous secondary battery that more strongly adheres battery members to each other even through pressing at normal temperature.

The "glass-transition temperature" referred to in the present specification can be measured by a measurement method described in the EXAMPLES section of the present specification.

In the presently disclosed composition for a non-aqueous secondary battery adhesive layer, it is preferable that a polymer of the shell portion has a glass-transition temperature of 50°C or higher.

When the glass-transition temperature of the polymer of the shell portion is not lower than the lower limit set forth above, it is possible to inhibit nozzle clogging when the composition for a non-aqueous secondary battery adhesive layer is ejected as fine droplets by an inkjet method. In other words, inkjet ejection characteristics can be improved.

In the presently disclosed composition for a non-aqueous secondary battery adhesive layer, it is preferable that a mass proportion of the shell portion in the first particulate polymer is not less than 2 mass% and not more than 15 mass%.

When the mass proportion of the shell portion is not less than the lower limit set forth above, inkjet ejection characteristics of the composition for a non-aqueous secondary battery adhesive layer can be improved. On the other hand, when the mass proportion of the shell portion is not more than the upper limit set forth above, it is possible to form an adhesive layer for a non-aqueous secondary battery that more strongly adheres battery members to each other even through pressing at normal temperature.

Note that the mass proportion of the shell portion in the first particulate polymer is determined from a ratio of thicknesses of the core portion and the shell portion and the specific gravity of the particulate polymer.

In the presently disclosed composition for a non-aqueous secondary battery adhesive layer, it is preferable that a proportion constituted by the (meth)acrylate monomer unit including a chain alkyl group having a carbon number of 4 or more in the polymer of the core portion is 90 mass% or more when all monomer units included in the core portion are taken to be 100 mass%, and a proportion constituted by the (meth)acrylate monomer unit including a chain alkyl group having a carbon number of 4 or more in the second particulate polymer is 75 mass% or more when all monomer units included in the second particulate polymer are taken to be 100 mass%.

When the proportions constituted by the (meth)acrylate monomer units including a chain alkyl group having a carbon number of 4 or more in the polymer of the core portion and the second particulate polymer are not less than the lower limits set forth above, it is possible to form an adhesive layer for a non-aqueous secondary battery that more strongly adheres battery members to each other even through pressing at normal temperature.

The proportion constituted by each type of monomer unit in a polymer referred to in the present specification can be measured by a nuclear magnetic resonance (NMR) method such as $^1$H-NMR or $^{13}$C-NMR.

In the presently disclosed composition for a non-aqueous secondary battery adhesive layer, it is preferable that a structural formula of the (meth)acrylate monomer unit including a chain alkyl group having a carbon number of 4 or more in the second particulate polymer is the same as a structural formula of the (meth)acrylate monomer unit including a chain alkyl group having a carbon number of 4 or more in the first particulate polymer.

When the structural formula of the (meth)acrylate monomer unit including a chain alkyl group having a carbon number of 4 or more in the second particulate polymer is the same as the structural formula of the (meth)acrylate monomer unit including a chain alkyl group having a carbon number of 4 or more in the first particulate polymer, it is possible to form an adhesive layer for a non-aqueous secondary battery that more strongly adheres battery members to each other even through pressing at normal temperature.

In the presently disclosed composition for a non-aqueous secondary battery adhesive layer, it is preferable that the (meth)acrylate monomer unit including a chain alkyl group having a carbon number of 4 or more in the first particulate polymer and the (meth)acrylate monomer unit including a chain alkyl group having a carbon number of 4 or more in the second particulate polymer are each a (meth)acrylate monomer unit including a chain alkyl group having a carbon number of not less than 4 and not more than 10.

When the (meth)acrylate monomer units including a chain alkyl group having a carbon number of 4 or more in the first particulate polymer and the second particulate polymer are each a (meth)acrylate monomer unit including a chain alkyl group having a carbon number of not less than 4 and not more than 10, it is possible to form an adhesive layer for a non-aqueous secondary battery that more strongly adheres battery members to each other even through pressing at normal temperature.

In the presently disclosed composition for a non-aqueous secondary battery adhesive layer, it is preferable that the (meth)acrylate monomer unit including a chain alkyl group having a carbon number of 4 or more in the first particulate polymer and the (meth)acrylate monomer unit including a chain alkyl group having a carbon number of 4 or more in the second particulate polymer are each an n-butyl acrylate unit.

When the (meth)acrylate monomer units including a chain alkyl group having a carbon number of 4 or more in the first particulate polymer and the second particulate polymer are each an n-butyl acrylate unit, it is possible to form an adhesive layer for a non-aqueous secondary battery that even more strongly adheres battery members to each other even through pressing at normal temperature.

In the presently disclosed composition for a non-aqueous secondary battery adhesive layer, it is preferable that at least one of the first particulate polymer and the second particulate polymer further includes a nitrile group-containing monomer unit.

When at least one of the first particulate polymer and the second particulate polymer further includes a nitrile group-containing monomer unit, inkjet ejection characteristics of the composition for a non-aqueous secondary battery adhesive layer can be improved. Moreover, when at least one of the first particulate polymer and the second particulate polymer further includes a nitrile group-containing monomer unit, it is possible to obtain a non-aqueous secondary battery having excellent cycle characteristics.

Moreover, the present disclosure aims to solve the problem set forth above, and a presently disclosed adhesive layer for a non-aqueous secondary battery is obtained using the composition for a non-aqueous secondary battery adhesive layer set forth above. With an adhesive layer for a non-aqueous secondary battery such as set forth above, it is possible to strongly adhere battery members to each other even through pressing at normal temperature.

Furthermore, the present disclosure aims to solve the problem set forth above, and a presently disclosed method of producing an adhesive layer for a non-aqueous secondary battery comprises: applying the composition for a non-aqueous secondary battery adhesive layer set forth above onto a substrate; and drying the composition for a non-aqueous secondary battery adhesive layer that has been applied onto the substrate. With a method of producing an adhesive layer for a non-aqueous secondary battery such as set forth above, it is possible to produce an adhesive layer for a non-aqueous secondary battery that can strongly adhere battery members to each other even through pressing at normal temperature.

Also, the present disclosure aims to solve the problem set forth above, and a presently disclosed laminate for a non-aqueous secondary battery comprises an electrode and a separator, wherein the electrode and the separator are adhered via the adhesive layer for a non-aqueous secondary battery set forth above. A laminate for a non-aqueous secondary battery such as set forth above has excellent adhesiveness of battery members to each other.

Moreover, the present disclosure aims to solve the problem set forth above, and a presently disclosed method of producing a laminate for a non-aqueous secondary battery comprises: supplying an adhesive material to an affixing surface of at least one of an electrode and a separator; and pressing and affixing the electrode and the separator via the affixing surface to which the adhesive material has been supplied, wherein the adhesive material is obtained using the composition for a non-aqueous secondary battery adhesive layer set forth above. Through a method of producing a laminate for a non-aqueous secondary battery such as set forth above, it is possible to produce a laminate for a non-aqueous secondary battery having excellent adhesiveness of battery members to each other.

Furthermore, the present disclosure aims to solve the problem set forth above, and a presently disclosed non-aqueous secondary battery comprises the laminate for a non-aqueous secondary battery set forth above. A non-aqueous secondary battery such as set forth above has excellent adhesiveness of battery members to each other.

(Advantageous Effect)

According to the present disclosure, it is possible to provide a composition for a non-aqueous secondary battery adhesive layer with which it is possible to form an adhesive layer for a non-aqueous secondary battery that strongly adheres battery members to each other even through pressing at normal temperature.

Moreover, according to the present disclosure, it is possible to provide an adhesive layer for a non-aqueous secondary battery that can strongly adhere battery members to each other even through pressing at normal temperature and also to provide a method of producing this adhesive layer for a non-aqueous secondary battery.

Furthermore, according to the present disclosure, it is possible to provide a laminate for a non-aqueous secondary battery having excellent adhesiveness of battery members to each other and also to provide a method of producing this laminate for a non-aqueous secondary battery.

Also, according to the present disclosure, it is possible to provide a non-aqueous secondary battery having excellent adhesiveness of battery members to each other.

BRIEF DESCRIPTION OF THE DRAWINGS

In the accompanying drawings:

FIG. 1 is a cross-sectional view schematically illustrating the structure of one example of a first particulate polymer;
FIG. 2 is a diagram for describing one example of a production process of a presently disclosed laminate for a non-aqueous secondary battery; and
FIG. 3 is a diagram for describing a production process of a laminate for a non-aqueous secondary battery in examples and comparative examples.

DETAILED DESCRIPTION

The following provides a detailed description of embodiments of the present disclosure.

The presently disclosed composition for a non-aqueous secondary battery adhesive layer can be used in formation of the presently disclosed adhesive layer for a non-aqueous secondary battery. The presently disclosed adhesive layer for a non-aqueous secondary battery can be produced by the presently disclosed method of producing an adhesive layer for a non-aqueous secondary battery, for example. The presently disclosed adhesive layer for a non-aqueous secondary battery can be used in production of the presently disclosed laminate for a non-aqueous secondary battery and the presently disclosed non-aqueous secondary battery. The presently disclosed laminate for a non-aqueous secondary battery can be used in production of the presently disclosed non-aqueous secondary battery and can be produced by the presently disclosed method of producing a laminate for a non-aqueous secondary battery, for example. Moreover, the presently disclosed non-aqueous secondary battery includes the presently disclosed laminate for a non-aqueous secondary battery.

(Composition for non-aqueous secondary battery adhesive layer)

The presently disclosed composition for a non-aqueous secondary battery adhesive layer contains a first particulate polymer and a second particulate polymer differing from the first particulate polymer. The presently disclosed composition for a non-aqueous secondary battery adhesive layer is typically a slurry composition having the particulate polymers dispersed in a solvent such as water and can optionally contain other components besides the first particulate polymer and the second particulate polymer.

In the presently disclosed composition for a non-aqueous secondary battery adhesive layer, the second particulate polymer and a polymer of a core portion that is included in the first particulate polymer each include a (meth)acrylate monomer unit including a chain alkyl group having a carbon number of 4 or more, and when a proportion constituted by the (meth)acrylate monomer unit including a chain alkyl group having a carbon number of 4 or more in the first particulate polymer is taken to be A mass%, a proportion constituted by the (meth)acrylate monomer unit including a chain alkyl group having a carbon number of 4 or more in the second particulate polymer is taken to be B mass%, proportional content of the first particulate polymer among total mass of the first particulate polymer and the second particulate polymer is taken to be X mass%, and proportional content of the second particulate polymer among total mass of the first particulate polymer and the second particulate polymer is taken to be Y mass%, a value calculated by formula (1), shown below:

$$(AX + BY)/(X + Y) \qquad (1)$$

is 75 mass% or more.

By using the composition for a non-aqueous secondary battery adhesive layer set forth above, it is possible to form an adhesive layer for a non-aqueous secondary battery that strongly adheres battery members to each other even through pressing at normal temperature. Although it is not clear why an adhesive layer formed from the presently disclosed composition for an adhesive layer displays good adhesiveness even through pressing at normal temperature in this manner, the reason for this is presumed to be as follows.

Specifically, when the first particulate polymer and the second particulate polymer each include a (meth)acrylate monomer unit including a chain alkyl group having a carbon number of 4 or more, the first particulate polymer and the second particulate polymer can display good adhesiveness in an adhesive layer for a non-aqueous secondary battery and can impart strong adhesive strength. Moreover, when the value calculated by formula (1) is 75 mass% or more, there is better compatibility of the polymers with each other in an adhesive layer for a non-aqueous secondary battery, and, as a result, it is possible to form an adhesive layer for a non-aqueous secondary battery that strongly adheres battery members to each other even through pressing at normal temperature.

The value calculated by formula (1) is preferably 80 mass% or more, and more preferably 90 mass% or more because this makes it possible to form an adhesive layer for a non-aqueous secondary battery that more strongly adheres battery members to each other even through pressing at normal temperature.

On the other hand, the value calculated by formula (1) is preferably 99 mass% or less because this can improve inkjet ejection characteristics of the composition for a non-aqueous secondary battery adhesive layer.

<First particulate polymer>

The first particulate polymer has a core-shell structure including a core portion and a shell portion at least partially covering an outer surface of the core portion. The shell portion may completely cover the outer surface of the core portion or may partially cover the outer surface of the core portion. In terms of external appearance, even in a situation in which the outer surface of the core portion appears to be completely covered by the shell portion, the shell portion is still considered to be a shell portion that partially covers the outer surface of the core portion so long as pores are formed that pass between inside and outside of the shell portion.

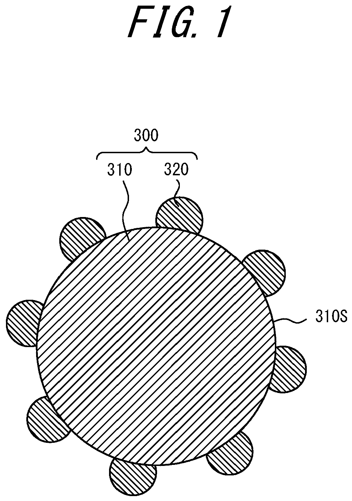

FIG. 1 illustrates cross-sectional structure of one example of the first particulate polymer. A first particulate polymer 300 illustrated in FIG. 1 has a core-shell structure including a core portion 310 and a shell portion 320. The core portion 310 is a portion that is further inward than the shell portion 320 in the first particulate polymer 300. The shell portion 320 is a portion that covers an outer surface 310S of the core portion 310 and is normally a portion that is furthest outward in the first particulate polymer 300. In the example illustrated in FIG. 1, the shell portion 320 partially covers the outer surface 310S of the core portion 310 rather than completely covering the outer surface 310S of the core portion 310.

Note that the first particulate polymer may include any constituent elements other than the core portion and the shell portion described above so long as the expected effects are not significantly lost. Specifically, the first particulate polymer may, for example, include a portion inside of the core portion that is formed of a different polymer to the core portion. In one specific example, a residual seed particle may be present inside of the core portion in a situation in which seed particles are used in production of the first particulate polymer by seeded polymerization. However, from a viewpoint of more noticeably displaying the expected effects, it is preferable that the first particulate polymer is composed of only the core portion and the shell portion.

The first particulate polymer includes a core portion that includes a (meth)acrylate monomer unit including a chain alkyl group having a carbon number of 4 or more as described below, and thus the first particulate polymer also includes a (meth)acrylate monomer unit including a chain alkyl group having a carbon number of 4 or more. The (meth)acrylate monomer unit including a chain alkyl group having a carbon number of 4 or more is a repeating unit that can be derived from a (meth)acrylate monomer including a chain alkyl group having a carbon number of 4 or more. The (meth)acrylate monomer unit including a chain alkyl group having a carbon number of 4 or more may be a butyl acrylate unit such as an n-butyl acrylate unit or a t-butyl acrylate unit; a hexyl acrylate unit such as an n-hexyl acrylate unit; an octyl acrylate unit such as an n-octyl acrylate unit or a 2-ethylhexyl acrylate unit; a decyl acrylate unit such as an n-decyl acrylate unit; a dodecyl acrylate unit such as an n-dodecyl acrylate unit; a butyl methacrylate unit such as an n-butyl methacrylate unit or a t-butyl methacrylate unit; a hexyl methacrylate unit such as an n-hexyl methacrylate unit; an octyl methacrylate unit such as an n-octyl methacrylate unit or a 2-ethylhexyl methacrylate unit; a decyl methacrylate unit such as an n-decyl methacrylate unit; a dodecyl methacrylate unit such as an n-dodecyl methacrylate unit; or the like, for example. The first particulate polymer may include one of these types of (meth)acrylate monomer units individually or may include two or more of these types of (meth)acrylate monomer units in a freely selected ratio.

The (meth)acrylate monomer unit including a chain alkyl group having a carbon number of 4 or more in the first particulate polymer is preferably a (meth)acrylate monomer unit including a chain alkyl group having a carbon number of not less than 4 and not more than 10, and more preferably a (meth)acrylate monomer unit including a chain alkyl group having a carbon number of not less than 4 and not more than 8.

When the carbon number of the chain alkyl group is not less than the lower limit set forth above, it is possible to form an adhesive layer for a non-aqueous secondary battery that more strongly adheres battery members to each other even through pressing at normal temperature. On the other hand, when the carbon number of the chain alkyl group is not more than any of the upper limits set forth above, crystallinity of the polymer decreases, the glass-transition temperature of the polymer falls, and, as a result, adhesive strength of battery members to each other through pressing at normal temperature can be improved.

The (meth)acrylate monomer unit including a chain alkyl group having a carbon number of 4 or more in the first particulate polymer is particularly preferably an n-butyl acrylate unit because this makes it possible to form an adhesive layer for a non-aqueous secondary battery that even more strongly adheres battery members to each other even through pressing at normal temperature.

The proportion constituted by the (meth)acrylate monomer unit including a chain alkyl group having a carbon number of 4 or more in the first particulate polymer when all repeating units (all monomer units) included in the first particulate polymer are taken to be 100 mass% is preferably 75 mass% or more, more preferably 80 mass% or more, even more preferably 85 mass% or more, and particularly preferably 90 mass% or more, and is preferably 99 mass% or less, and more preferably 97 mass% or less.

When this proportion is not less than any of the lower limits set forth above, it is possible to form an adhesive layer for a non-aqueous secondary battery that more strongly adheres battery members to each other even through pressing at normal temperature. Moreover, when this proportion is not less than any of the lower limits set forth above, it is possible to obtain a secondary battery having excellent cycle characteristics. On the other hand, when this proportion is not more than any of the upper limits set forth above, inkjet ejection characteristics can be improved.

The first particulate polymer preferably further includes a nitrile group-containing monomer unit. The nitrile group-containing monomer unit is a repeating unit that can be derived from a nitrile group-containing monomer. When the first particulate polymer further includes a nitrile group-containing monomer unit, inkjet ejection characteristics of the composition for a non-aqueous secondary battery adhesive layer can be improved. Moreover, when the first particulate polymer further includes a nitrile group-containing monomer unit, it is possible to obtain a non-aqueous secondary battery having excellent cycle characteristics.

The nitrile group-containing monomer unit may be an $\alpha,\beta$-ethylenically unsaturated nitrile monomer unit such as an acrylonitrile unit, an $\alpha$-halogenoacrylonitrile unit ($\alpha$-chloroacrylonitrile unit, $\alpha$-bromoacrylonitrile unit, etc.), or an $\alpha$-alkylacrylonitrile unit (methacrylonitrile unit, $\alpha$-ethylacrylonitrile unit, etc.), for example. The first particulate polymer may include one of these types of nitrile group-containing monomer units individually or may include two or more of these types of nitrile group-containing monomer units in a freely selected ratio. The nitrile group-containing monomer unit is preferably an acrylonitrile unit.

The proportion constituted by the nitrile group-containing monomer unit in the first particulate polymer when all repeating units (all monomer units) included in the first particulate polymer are taken to be 100 mass% is preferably 1 mass% or more, and is preferably 15 mass% or less, and more preferably 5 mass% or less.

When the proportion constituted by the nitrile group-containing monomer unit in the first particulate polymer is not less than the lower limit set forth above, inkjet ejection characteristics of the composition for a non-aqueous secondary battery adhesive layer can be further improved. Moreover, when the proportion constituted by the nitrile group-containing monomer unit in the first particulate polymer is not less than the lower limit set forth above, a non-aqueous secondary battery having even better cycle characteristics can be obtained. On the other hand, when the proportion constituted by the nitrile group-containing monomer unit in the first particulate polymer is not more than any of the upper limits set forth above, it is possible to form an adhesive layer for a non-aqueous secondary battery that more strongly adheres battery members to each other even through pressing at normal temperature.

{Core portion}

The polymer of the core portion includes a (meth)acrylate monomer unit including a chain alkyl group having a carbon number of 4 or more. When the polymer of the core portion includes a (meth)acrylate monomer unit including a chain alkyl group having a carbon number of 4 or more, it is possible to form an adhesive layer for a non-aqueous secondary battery that strongly adheres battery members to each other even through pressing at normal temperature.

The (meth)acrylate monomer unit including a chain alkyl group having a carbon number of 4 or more may be any of those previously listed. The polymer of the core portion may include one of the previously listed types of (meth)acrylate monomer units individually or may include two or more of the previously listed types of (meth)acrylate monomer units in a freely selected ratio.

The (meth)acrylate monomer unit including a chain alkyl group having a carbon number of 4 or more in the polymer of the core portion is preferably a (meth)acrylate monomer unit including a chain alkyl group having a carbon number of not less than 4 and not more than 10, and more preferably a (meth)acrylate monomer unit including a chain alkyl group having a carbon number of not less than 4 and not more than 8.

When the carbon number of the chain alkyl group is not less than the lower limit set forth above, it is possible to form an adhesive layer for a non-aqueous secondary battery that more strongly adheres battery members to each other even through pressing at normal temperature. On the other hand, when the carbon number of the chain alkyl group is not more than any of the upper limits set forth above, crystallinity of the polymer decreases, the glass-transition temperature of the polymer falls, and, as a result, adhesive strength of battery members to each other through pressing at normal temperature can be improved.

The (meth)acrylate monomer unit including a chain alkyl group having a carbon number of 4 or more in the polymer of the core portion is particularly preferably an n-butyl acrylate unit because this makes it possible to form an adhesive layer for a non-aqueous secondary battery that even more strongly adheres battery members to each other even through pressing at normal temperature.

The proportion constituted by the (meth)acrylate monomer unit including a chain alkyl group having a carbon number of 4 or more in the polymer of the core portion when all repeating units (all monomer units) included in the polymer of the core portion are taken to be 100 mass% is preferably 75 mass% or more, more preferably 85 mass% or more, even more preferably 90 mass% or more, and particularly preferably 95 mass% or more, and is preferably 99 mass% or less, and more preferably 97 mass% or less.

When this proportion is not less than any of the lower limits set forth above, it is possible to form an adhesive layer for a non-aqueous secondary battery that more strongly adheres battery members to each other even through pressing at normal temperature. Moreover, when this proportion is not less than any of the lower limits set forth above, it is possible to obtain a secondary battery having excellent cycle characteristics. On the other hand, when this proportion is not more than any of the upper limits set forth above, inkjet ejection characteristics can be improved.

The polymer of the core portion preferably further includes a nitrile group-containing monomer unit. When the polymer of the core portion further includes a nitrile group-containing monomer unit, inkjet ejection characteristics of the composition for a non-aqueous secondary battery adhesive layer can be improved. Moreover, when the polymer of the core portion further includes a nitrile group-containing monomer unit, it is possible to obtain a non-aqueous secondary battery having excellent cycle characteristics.

The nitrile group-containing monomer unit may be any of those previously listed. The polymer of the core portion may include one of the previously listed types of nitrile group-containing monomer units individually or may include two or more of the previously listed types of nitrile group-containing monomer units in a freely selected ratio. The nitrile group-containing monomer unit is preferably an acrylonitrile unit.

The proportion constituted by the nitrile group-containing monomer unit in the polymer of the core portion when all repeating units (all monomer units) included in the polymer of the core portion are taken to be 100 mass% is preferably 1 mass% or more, and is preferably 15 mass% or less, and more preferably 5 mass% or less.

When the proportion constituted by the nitrile group-containing monomer unit in the polymer of the core portion is not less than the lower limit set forth above, inkjet ejection characteristics of the composition for a non-aqueous secondary battery adhesive layer can be further improved. Moreover, when the proportion constituted by the nitrile group-containing monomer unit in the polymer of the core portion is not less than the lower limit set forth above, a non-aqueous secondary battery having even better cycle characteristics can be obtained. On the other hand, when the proportion constituted by the nitrile group-containing monomer unit in the polymer of the core portion is not more than any of the upper limits set forth above, it is possible to form an adhesive layer for a non-aqueous secondary battery that more strongly adheres battery members to each other even through pressing at normal temperature.

The polymer of the core portion may include a hydrophilic group-containing monomer unit. The hydrophilic group-containing monomer unit is a repeating unit that can be derived from a hydrophilic group monomer. The hydrophilic group monomer may be an acid group-containing monomer, a hydroxyl group-containing monomer, or the like. Of these examples, an acid group-containing monomer is preferable as the hydrophilic group monomer because this makes it possible to increase dispersibility of the polymer of the core portion and to facilitate formation of the shell portion with respect to the outer surface of the polymer of the core portion during production of the first particulate polymer. In other words, the hydrophilic group-containing monomer unit is preferably an acid group-containing monomer unit.

The acid group-containing monomer may be a monomer including an acid group such as a carboxy group-containing monomer, a sulfo group-containing monomer, or a phosphate group-containing monomer, for example.

The carboxy group-containing monomer may be a monocarboxylic acid, a dicarboxylic acid, or the like, for example. The monocarboxylic acid may be acrylic acid, methacrylic acid, crotonic acid, or the like, for example. The dicarboxylic acid may be maleic acid, fumaric acid, itaconic acid, or the like, for example.

The sulfo group-containing monomer may be vinyl sulfonic acid, methyl vinyl sulfonic acid, (meth)allyl sulfonic acid, (meth)acrylic acid 2-sulfoethyl, 2-acrylamido-2-methylpropane sulfonic acid, 3-allyloxy-2-hydroxypropane sulfonic acid, or the like, for example.

The phosphate group-containing monomer may be 2-(meth)acryloyloxy ethyl phosphate, methyl-2-(meth)acryloyloxy ethyl phosphate, ethyl-(meth)acryloyloxyethyl phosphate, or the like, for example.

Note that in the present specification, "(meth)allyl" is used to indicate "allyl" and/or "methallyl", "(meth)acryloyl" is used to indicate "acryloyl" and/or "methacryloyl", and "(meth)acryl" is used to indicate "acryl" and/or "methacryl".

Of these examples, carboxy group-containing monomers are preferable as the acid group-containing monomer, of which, monocarboxylic acids are preferable, and (meth)acrylic acid is more preferable.

One acid group-containing monomer may be used individually, or two or more acid group-containing monomers may be used in combination in a freely selected ratio.

The hydroxyl group-containing monomer may be a monomer including a hydroxyl group such as 2-hydroxyethyl acrylate, 2-hydroxypropyl acrylate, 2-hydroxyethyl methacrylate, or 2-hydroxypropyl methacrylate, for example. One hydroxyl group-containing monomer may be used individually, or two or more hydroxyl group-containing monomers may be used in combination in a freely selected ratio.

The proportion constituted by the hydrophilic group-containing monomer unit in the polymer of the core portion when all repeating units (all monomer units) included in the polymer of the core portion are taken to be 100 mass% is preferably 0.1 mass% or more, and more preferably 1 mass% or more, and is preferably 15 mass% or less, more preferably 10 mass% or less, and even more preferably 5 mass% or less. By keeping the proportion constituted by the hydrophilic group-containing monomer unit within any of the ranges set forth above, it is possible to increase dispersibility of the polymer of the core portion and facilitate formation of the shell portion with respect to the outer surface of the polymer of the core portion during production of the particulate polymer.

The polymer of the core portion preferably includes a cross-linkable monomer unit in addition to the monomer units described above. The cross-linkable monomer unit is a repeating unit that can be derived from a cross-linkable monomer. The cross-linkable monomer is a monomer that can form a cross-linked structure during or after polymerization through heating or irradiation with energy rays.

The cross-linkable monomer may, for example, be a polyfunctional monomer that includes two or more groups displaying polymerization reactivity in the monomer. Examples of such polyfunctional monomers include divinyl monomers such as divinylbenzene, 1,3-butadiene, isoprene, and allyl methacrylate; di(meth)acrylic acid ester monomers such as ethylene dimethacrylate, diethylene glycol dimethacrylate, ethylene glycol dimethacrylate, diethylene glycol diacrylate, and 1,3-butylene glycol diacrylate; tri(meth)acrylic acid ester monomers such as trimethylolpropane trimethacrylate and trimethylolpropane triacrylate; epoxy group-containing ethylenically unsaturated monomers such as allyl glycidyl ether and glycidyl methacrylate; $\gamma$-methacryloxypropyltrimethoxysilane; and methylol group-containing (meth)acrylamides such as N-methylol(meth)acrylamide. Note that methylol group-containing (meth)acrylamides are categorized as cross-linkable monomers despite including a hydroxyl group. Of these cross-linkable monomers, di(meth)acrylic acid ester monomers are more preferable. One of these cross-linkable monomers may be used individually, or two or more of these cross-linkable monomers may be used in combination in a freely selected ratio.

The proportion constituted by the cross-linkable monomer unit in the polymer of the core portion when all repeating units (all monomer units) included in the polymer of the core portion are taken to be 100 mass% is preferably 0.05 mass% or more, and more preferably 0.08 mass% or more, and is preferably 1 mass% or less, more preferably 0.3 mass% or less, and particularly preferably 0.15 mass% or less.

When the proportion constituted by the cross-linkable monomer unit is within any of the ranges set forth above, it is possible to form an adhesive layer for a non-aqueous secondary battery that even more strongly adheres battery members to each other even through pressing at normal temperature.

The polymer of the core portion may optionally further include other monomer units to the extent that the objects of the present disclosure are not lost. These other monomer units are repeating units that can be derived from other monomers. Examples of other monomers include vinyl chloride monomers such as vinyl chloride and vinylidene chloride; vinyl acetate monomers such as vinyl acetate; aromatic vinyl monomers such as styrene, α-methylstyrene, butoxystyrene, and vinylnaphthalene; vinyl amine monomers such as vinyl amine; vinyl amide monomers such as N-vinylformamide and N-vinylacetamide; (meth)acrylate monomers including a chain alkyl group having a carbon number of 3 or less; and (meth)acrylamide monomers such as acrylamide and methacrylamide. One of these other monomers may be used individually, or two or more of these other monomers may be used in combination in a freely selected ratio.

Note that in the present specification, "(meth)acrylamide" is used to indicate "acrylamide" and/or "methacrylamide".

Also note that the term "(meth)acrylate including a chain alkyl group having a carbon number of 3 or less" as used in the present specification refers to a (meth)acrylate in which a chain alkyl group having a carbon number of 3 or less is bonded to a non-carbonyl oxygen atom of the (meth)acrylate.

{Characteristics of core portion}

The glass-transition temperature of the polymer of the core portion is preferably -50°C or higher, and more preferably -45°C or higher, and is preferably -10°C or lower, more preferably -20°C or lower, and even more preferably -30°C or lower.

When the glass-transition temperature of the polymer of the core portion is not lower than any of the lower limits set forth above, inkjet ejection characteristics can be improved. On the other hand, when the glass-transition temperature of the polymer of the core portion is not higher than any of the upper limits set forth above, the polymer of the core portion can display good adhesiveness, and it is possible to form an adhesive layer for a non-aqueous secondary battery that more strongly adheres battery members to each other even through pressing at normal temperature.

Note that the glass-transition temperature of the polymer of the core portion can be adjusted by altering the types and proportions of monomers used to produce the polymer of the core portion, for example.

{Shell portion}

The shell portion is a portion that at least partially covers an outer surface of the core portion and that preferably has a different chemical composition and/or characteristic to the core portion. The expression "different chemical composition" means that the types and/or proportions of monomer units included in the polymer are different. The expression "different characteristic" means that a characteristic such as glass-transition temperature is different.

Examples of monomer units that may be included in the polymer of the shell portion include the same monomer units as given as examples of monomer units that can be included in the polymer of the core portion. Moreover, the polymer of the shell portion may include one of the previously listed types of monomer units individually or may include two or more of the previously listed types of monomer units in a freely selected ratio.

Of these monomer units, it is preferable that an aromatic vinyl monomer unit is included in the polymer of the shell portion. The aromatic vinyl monomer unit is a repeating unit that can be derived from an aromatic vinyl monomer. Through the inclusion of an aromatic vinyl monomer unit in the polymer of the shell portion, it is possible to improve inkjet ejection characteristics. The aromatic vinyl monomer unit is particularly preferably a styrene unit.

The proportion constituted by the aromatic vinyl monomer unit in the polymer of the shell portion when all repeating units (all monomer units) included in the polymer of the shell portion are taken to be 100 mass% is preferably 55 mass% or more, more preferably 70 mass% or more, even more preferably 85 mass% or more, further preferably 90 mass% or more, and even further preferably 95 mass% or more.

When the proportion constituted by the aromatic vinyl monomer unit in the polymer of the shell portion is not less than any of the lower limits set forth above, inkjet ejection characteristics can be further improved.

On the other hand, the proportion constituted by the aromatic vinyl monomer unit in the polymer of the shell portion when all repeating units (all monomer units) included in the polymer of the shell portion are taken to be 100 mass% is 99.9 mass% or less, for example, and may be 99.6 mass% or less, 99.3 mass% or less, 99 mass% or less, or 97 mass% or less.

The polymer of the shell portion may include a hydrophilic group-containing monomer unit. Examples of hydrophilic group-containing monomers that can form the hydrophilic group-containing monomer unit of the polymer of the shell portion include the same monomers as hydrophilic group-containing monomers that can be used in formation of the core portion.

The proportion constituted by the hydrophilic group-containing monomer unit in the polymer of the shell portion when all repeating units (all monomer units) included in the polymer of the shell portion are taken to be 100 mass% is preferably 0.5 mass% or more, more preferably 1 mass% or more, and even more preferably 3 mass% or more.

When the proportion constituted by the hydrophilic group-containing monomer unit is not less than any of the lower limits set forth above, dispersibility of the first particulate polymer can be improved, and it is possible to form an adhesive layer for a non-aqueous secondary battery that even more strongly adheres battery members to each other even through pressing at normal temperature.

On the other hand, the proportion constituted by the hydrophilic group-containing monomer unit in the polymer of the shell portion when all repeating units (all monomer units) included in the polymer of the shell portion are taken to be 100 mass% is 15 mass% or less, for example, and may be 10 mass% or less, or 7 mass% or less.

The polymer of the shell portion may optionally further include a (meth)acrylate monomer unit including a chain alkyl group having a carbon number of 4 or more such as previously described and other monomer units such as previously described to the extent that the objects of the present disclosure are not lost.

The proportion constituted by the (meth)acrylate monomer unit including a chain alkyl group having a carbon number of 4 or more in the polymer of the shell portion when all repeating units (all monomer units) included in the polymer of the shell portion are taken to be 100 mass% is preferably 40 mass% or less, more preferably 15 mass% or less, even more preferably 1 mass% or less, further preferably 0.1 mass% or less, and particularly preferably 0 mass% (i.e., it is particularly preferable that the polymer of the shell portion does not include a (meth)acrylate monomer unit including a chain alkyl group having a carbon number of 4 or more) from a viewpoint of inkjet ejection characteristics. Note that the expression "the polymer of the shell portion does not include a (meth)acrylate monomer unit including a chain alkyl group having a carbon number of 4 or more" means not detected in measurement of the proportion constituted by a (meth)acrylate monomer unit including a chain alkyl group having a carbon number of 4 or more.

The mass proportion of the shell portion in the first particulate polymer is preferably 2 mass% or more, and is preferably 20 mass% or less, more preferably 15 mass% or less, even more preferably 10 mass% or less, and particularly preferably 5 mass% or less.

When the mass proportion of the shell portion is not less than the lower limit set forth above, inkjet ejection characteristics can be further improved. On the other hand, when the mass proportion of the shell portion is not more than any of the upper limits set forth above, it is possible to form an adhesive layer for a non-aqueous secondary battery that more strongly adheres battery members to each other even through pressing at normal temperature.

Note that the mass proportion of the shell portion in the first particulate polymer is calculated from a subsequently described ratio of thicknesses of the core portion and the shell portion and the specific gravity of the particulate polymer.

{Characteristics of shell portion}

The glass-transition temperature of the polymer of the shell portion in the first particulate polymer is preferably 35°C or higher, more preferably 50°C or higher, and even more preferably 80°C or higher, and is preferably 200°C or lower, and more preferably 120°C or lower.

When the glass-transition temperature of the polymer of the shell portion is not lower than any of the lower limits set forth above, inkjet ejection characteristics can be further improved. On the other hand, when the glass-transition temperature of the polymer of the shell portion is not higher than any of the upper limits set forth above, it is possible to form an adhesive layer for a non-aqueous secondary battery that more strongly adheres battery members to each other even through pressing at normal temperature as a result of the first particulate polymer being softened to a suitable degree.

Note that the glass-transition temperature of the polymer of the shell portion can be adjusted by altering the types and proportions of monomers used to produce the polymer of the shell portion, for example.

<Characteristics of first particulate polymer>

The volume-average particle diameter of the first particulate polymer is preferably 100 nm or more, and more preferably 200 nm or more, and is preferably 1,500 nm or less, more preferably 900 nm or less, even more preferably 800 nm or less, and further preferably 700 nm or less.

When the volume-average particle diameter of the first particulate polymer is not less than any of the lower limits set forth above, it is possible to suppress deterioration of battery characteristics due to increased secondary battery resistance caused by blocking of lithium ion paths in a substrate (electrode or separator). On the other hand, when the volume-average particle diameter of the first particulate polymer is not more than any of the upper limits set forth above, it is possible to further inhibit nozzle clogging and improve inkjet ejection characteristics in a situation in which the composition for a non-aqueous secondary battery adhesive layer is applied by an inkjet method.

A ratio of the average thickness of the shell portion relative to the volume-average particle diameter of the first particulate polymer is preferably 0.1% or more, and more preferably 0.5% or more, and is preferably 15% or less, and more preferably 10% or less.

When the average thickness of the shell portion is not less than any of the lower limits set forth above, inkjet ejection characteristics can be improved. On the other hand, when the average thickness of the shell portion is not more than any of the upper limits set forth above, it is possible to form an adhesive layer for a non-aqueous secondary battery that more strongly adheres battery members to each other even through pressing at normal temperature.

Note that the average thickness of the shell portion of the first particulate polymer can be determined through observation of the cross-sectional structure of the first particulate polymer using a transmission electron microscope (TEM). Specifically, the maximum thickness of the shell portion is measured in the cross-sectional structure of the first particulate polymer using a TEM, and an average value for the maximum thickness of the shell portion in 20 or more arbitrarily selected particles of the first particulate polymer is taken to be the average thickness of the shell portion. However, in a case in which the shell portion is formed of particles of a polymer and in which the particles of the polymer form the shell portion as a monolayer without overlapping with one another in a radial direction of a particle of the particulate polymer, the number-average particle diameter of the particles forming the shell portion is taken to be the average thickness of the shell portion.

<Production method of first particulate polymer>

The first particulate polymer can be produced, for example, by stepwise polymerization in which the ratio of monomers for the polymer of the core portion and monomers for the polymer of the shell portion is changed over time. Specifically, the particulate polymer can be produced by continuous, multi-step emulsion polymerization or multi-step suspension polymerization in which a polymer of a preceding step is sequentially covered by a polymer of a subsequent step.

The following describes one example of a case in which the first particulate polymer is obtained by multi-step emulsion polymerization.

In the polymerization, an anionic surfactant such as sodium dodecylbenzenesulfonate or sodium dodecyl sulfate, a non-ionic surfactant such as polyoxyethylene nonylphenyl ether or sorbitan monolaurate, or a cationic surfactant such as octadecylamine acetate can, for example, be used as an emulsifier in accordance with a standard method. Moreover, a peroxide such as t-butyl peroxy-2-ethylhexanoate, potassium persulfate, or cumene peroxide or an azo compound such as 2,2'-azobis(2-methyl-N-(2-hydroxyethyl)propionamide) or 2,2'-azobis(2-amidinopropane) hydrochloride can, for example, be used as a polymerization initiator.

The polymerization procedure involves first mixing monomers for forming the core portion and the emulsifier, and performing emulsion polymerization as one batch to obtain a particulate polymer that forms the core portion. The first particulate polymer can then be obtained by performing polymerization of monomers for forming the shell portion in the presence of the particulate polymer forming the core portion.

In this polymerization, it is preferable that the monomers for forming the polymer of the shell portion are supplied into the polymerization system continuously or divided into a plurality of portions in a situation in which a particulate polymer having the outer surface of a core portion partially covered by a shell portion is to be produced. As a result of the monomers for forming the polymer of the shell portion being supplied into the polymerization system in portions or continuously, the polymer forming the shell portion can be formed as particles that bond to the core portion such as to form a shell portion that partially covers the core portion.

<Second particulate polymer>

The second particulate polymer is a particulate polymer that includes a (meth)acrylate monomer unit including a chain alkyl group having a carbon number of 4 or more and that differs from the first particulate polymer in terms of at least particle structure. The second particulate polymer is not specifically limited so long as it differs from the first particulate polymer in terms of at least one of chemical composition and particle structure and may, for example, have a structure that does not include a core-shell structure, such as a monophase structure that can be formed from a single polymer. The second particulate polymer preferably differs from the first particulate polymer in terms of chemical composition (for example, the types and proportions of monomer units included in the second particulate polymer).

Note that the (meth)acrylate monomer unit including a chain alkyl group having a carbon number of 4 or more may be any of those previously listed. The second particulate polymer may include one of the previously listed types of (meth)acrylate monomer units individually or may include two or more of the previously listed types of (meth)acrylate monomer units in a freely selected ratio.

A structural formula of the (meth)acrylate monomer unit including a chain alkyl group having a carbon number of 4 or more in the second particulate polymer is preferably the same as a structural formula of the (meth)acrylate monomer unit including a chain alkyl group having a carbon number of 4 or more in the first particulate polymer. Note that the expression "same structural formula" is not inclusive of a case in which the numbers of oxygen atoms, carbon atoms, and so forth are the same in each of the (meth)acrylate monomer units including a chain alkyl group having a carbon number of 4 or more but in which the structures thereof differ. For example, in a case in which the (meth)acrylate monomer unit including a chain alkyl group having a carbon number of 4 or more is an n-butyl acrylate unit, a t-butyl acrylate unit cannot be said to have the same structural formula.

When the structural formula of the (meth)acrylate monomer unit including a chain alkyl group having a carbon number of 4 or more in the second particulate polymer is the same as the structural formula of the (meth)acrylate monomer unit including a chain alkyl group having a carbon number of 4 or more in the first particulate polymer, it is possible to form an adhesive layer for a non-aqueous secondary battery that more strongly adheres battery members to each other even through pressing at normal temperature.

The (meth)acrylate monomer unit including a chain alkyl group having a carbon number of 4 or more in the second particulate polymer is preferably a (meth)acrylate monomer unit including a chain alkyl group having a carbon number of not less than 4 and not more than 10, and more preferably a (meth)acrylate monomer unit including a chain alkyl group having a carbon number of not less than 4 and not more than 8.

When the carbon number of the chain alkyl group is not less than the lower limit set forth above, it is possible to form an adhesive layer for a non-aqueous secondary battery that more strongly adheres battery members to each other even through pressing at normal temperature. On the other hand, when the carbon number of the chain alkyl group is not more than any of the upper limits set forth above, crystallinity of the polymer decreases, the glass-transition temperature of the polymer falls, and, as a result, adhesive strength of battery members to each other through pressing at normal temperature can be improved.

In a case in which the (meth)acrylate monomer unit including a chain alkyl group having a carbon number of 4 or more in the second particulate polymer is a (meth)acrylate monomer unit including a chain alkyl group having a carbon number of not less than 4 and not more than 10, it is preferable that the (meth)acrylate monomer unit including a chain alkyl group having a carbon number of 4 or more in the first particulate polymer is also a (meth)acrylate monomer unit including a chain alkyl group having a carbon number of not less than 4 and not more than 10, and in a case in which the (meth)acrylate monomer unit including a chain alkyl group having a carbon number of 4 or more in the second particulate polymer is a (meth)acrylate monomer unit including a chain alkyl group having a carbon number of not less than 4 and not more than 8, it is more preferable that the (meth)acrylate monomer unit including a chain alkyl group having a carbon number of 4 or more in the first particulate polymer is also a (meth)acrylate monomer unit including a chain alkyl group having a carbon number of not less than 4 and not more than 8. In other words, the (meth)acrylate monomer unit including a chain alkyl group having a carbon number of 4 or more in the second particulate polymer and the (meth)acrylate monomer unit including a chain alkyl group having a carbon number of 4 or more in the first particulate polymer are preferably each a (meth)acrylate monomer unit including a chain alkyl group having a carbon number of not less than 4 and not more than 10, and are more preferably each a (meth)acrylate monomer unit including a chain alkyl group having a carbon number of not less than 4 and not more than 8. When the composition for a non-aqueous secondary battery adhesive layer is as set forth above, it is possible to form an adhesive layer for a non-aqueous secondary battery that more strongly adheres battery members to each other even through pressing at normal temperature.

The (meth)acrylate monomer unit including a chain alkyl group having a carbon number of 4 or more in the second particulate polymer is particularly preferably an n-butyl acrylate unit because this makes it possible to form an adhesive layer for a non-aqueous secondary battery that even more strongly adheres battery members to each other even through pressing at normal temperature.

In a case in which the (meth)acrylate monomer unit including a chain alkyl group having a carbon number of 4 or more in the second particulate polymer is an n-butyl acrylate unit, it is preferable that the (meth)acrylate monomer unit including a chain alkyl group having a carbon number of 4 or more in the first particulate polymer is also an n-butyl acrylate unit. In other words, it is preferable that the (meth)acrylate monomer unit including a chain alkyl group having a carbon number of 4 or more in the second particulate polymer and the (meth)acrylate monomer unit including a chain alkyl group having a carbon number of 4 or more in the first particulate polymer are each an n-butyl acrylate unit. When the (meth)acrylate monomer units including a chain alkyl group having a carbon number of 4 or more in the first particulate polymer and the second particulate polymer are each an n-butyl acrylate unit, it is possible to form an adhesive layer for a non-aqueous secondary battery that even more strongly adheres battery members to each other even through pressing at normal temperature.

The proportion constituted by the (meth)acrylate monomer unit including a chain alkyl group having a carbon number of 4 or more in the second particulate polymer when all repeating units (all monomer units) included in the second particulate polymer are taken to be 100 mass% is preferably 70 mass% or more, more preferably 75 mass% or more, and even more preferably 90 mass% or more, and is preferably 99 mass% or less, and more preferably 95 mass% or less.

When this proportion is not less than any of the lower limits set forth above, it is possible to form an adhesive layer for a non-aqueous secondary battery that more strongly adheres battery members to each other even through pressing at normal temperature. Moreover, when this proportion is not less than any of the lower limits set forth above, it is possible to obtain a secondary battery having excellent cycle characteristics. On the other hand, when this proportion is not more than any of the upper limits set forth above, inkjet ejection characteristics can be improved.

The second particulate polymer preferably further includes a nitrile group-containing monomer unit. When the second particulate polymer includes a nitrile group-containing monomer unit, inkjet ejection characteristics of the composition for a non-aqueous secondary battery adhesive layer can be improved. Moreover, when the second particulate polymer includes a nitrile group-containing monomer unit, it is possible to obtain a non-aqueous secondary battery having excellent cycle characteristics.

The nitrile group-containing monomer unit may be any of those that were previously listed. The second particulate polymer may include one of the previously listed types of nitrile group-containing monomer units individually or may include two or more of the previously listed types of nitrile group-containing monomer units in a freely selected ratio. The nitrile group-containing monomer unit is preferably an acrylonitrile unit.

The proportion constituted by the nitrile group-containing monomer unit in the second particulate polymer when all repeating units (all monomer units) included in the second particulate polymer are taken to be 100 mass% is preferably 1 mass% or more, and is preferably 20 mass% or less, more preferably 15 mass% or less, and even more preferably 5 mass% or less.

When the proportion constituted by the nitrile group-containing monomer unit in the second particulate polymer is not less than the lower limit set forth above, inkjet ejection characteristics of the composition for a non-aqueous secondary battery adhesive layer can be further improved. Moreover, when the proportion constituted by the nitrile group-containing monomer unit in the second particulate polymer is not less than the lower limit set forth above, a non-aqueous secondary battery having even better cycle characteristics can be obtained. On the other hand, when the proportion constituted by the nitrile group-containing monomer unit in the second particulate polymer is not more than any of the upper limits set forth above, it is possible to form an adhesive layer for a non-aqueous secondary battery that more strongly adheres battery members to each other even through pressing at normal temperature.

Besides the (meth)acrylate monomer unit including a chain alkyl group having a carbon number of 4 or more and the nitrile group-containing monomer unit described above, the second particulate polymer may further include any of the same monomer units as those given as examples of monomer units included in the previously described first particulate polymer. Of these monomer units, it is preferable that the second particulate polymer includes an aromatic vinyl monomer unit, a hydrophilic group-containing monomer unit, a cross-linkable monomer unit, and a (meth)acrylate monomer unit including a chain alkyl group having a carbon number of 3 or less, for example. Moreover, the second particulate polymer may include one of these types of monomer units individually or may include two or more of these types of monomer units in a freely selected ratio.

Styrene is particularly preferably used as an aromatic vinyl monomer that can form the aromatic vinyl monomer unit.

A carboxy group-containing monomer is preferably used as a hydrophilic group-containing monomer that can form the hydrophilic group-containing monomer unit, with the use of a monocarboxylic acid being more preferable, and the use of at least one of acrylic acid and methacrylic acid being particularly preferable.

At least one monomer selected from the group consisting of a divinyl monomer, a di(meth)acrylic acid ester monomer, an epoxy group-containing ethylenically unsaturated monomer, and a methylol group-containing (meth)acrylamide is preferably used as a cross-linkable monomer that can form the cross-linkable monomer unit, with the use of at least one compound selected from the group consisting of allyl methacrylate, ethylene glycol dimethacrylate, allyl glycidyl ether, and N-methylolacrylamide being particularly preferable.

Ethyl acrylate is particularly preferably used as a (meth)acrylate monomer including a chain alkyl group having a carbon number of 3 or less that can form the (meth)acrylate monomer unit including a chain alkyl group having a carbon number of 3 or less.

The proportion constituted by the aromatic vinyl monomer unit in the second particulate polymer when all repeating units (all monomer units) included in the second particulate polymer are taken to be 100 mass% is preferably 10 mass% or more, more preferably 15 mass% or more, and even more preferably 20 mass% or more, and is preferably 40 mass% or less, more preferably 35 mass% or less, and even more preferably 30 mass% or less.

When the proportion constituted by the aromatic vinyl monomer unit is within any of the ranges set forth above, it is possible to form an adhesive layer for a non-aqueous secondary battery that more strongly adheres battery members to each other even through pressing at normal temperature.

The proportion constituted by the hydrophilic group-containing monomer unit in the second particulate polymer when all repeating units (all monomer units) included in the second particulate polymer are taken to be 100 mass% is preferably 0.5 mass% or more, more preferably 1 mass% or more, and even more preferably 2 mass% or more, and is preferably 10 mass% or less, more preferably 7 mass% or less, and even more preferably 5 mass% or less.

When the proportion constituted by the hydrophilic group-containing monomer unit is within any of the ranges set forth above, dispersibility of the second particulate polymer can be increased.

The proportion constituted by the cross-linkable monomer unit in the second particulate polymer when all repeating units (all monomer units) included in the second particulate polymer are taken to be 100 mass% is preferably 0.2 mass% or more, more preferably 0.5 mass% or more, and even more preferably 1 mass% or more, and is preferably 5 mass% or less, more preferably 4 mass% or less, and even more preferably 3 mass% or less.

When the proportion constituted by the cross-linkable monomer unit is within any of the ranges set forth above, it is possible to form an adhesive layer for a non-aqueous secondary battery that more strongly adheres battery members to each other even through pressing at normal temperature.

The proportion constituted by the (meth)acrylate monomer unit including a chain alkyl group having a carbon number of 3 or less in the second particulate polymer when all repeating units (all monomer units) included in the second particulate polymer are taken to be 100 mass% is preferably 1 mass% or more, and more preferably 3 mass% or more, and is preferably 10 mass% or less, and more preferably 8 mass% or less.

The content of the second particulate polymer in the composition for a non-aqueous secondary battery adhesive layer is preferably 5 parts by mass or more, and more preferably 8 parts by mass or more per 100 parts by mass of the first particulate polymer, and is preferably 20 parts by mass or less, and more preferably 15 parts by mass or less per 100 parts by mass of the first particulate polymer.

When the content of the second particulate polymer in the composition for a non-aqueous secondary battery adhesive layer is within any of the ranges set forth above, it is possible to form an adhesive layer for a non-aqueous secondary battery that more strongly adheres battery members to each other even through pressing at normal temperature. Moreover, when the content of the second particulate polymer in the composition for a non-aqueous secondary battery adhesive layer is within any of the ranges set forth above, inkjet ejection characteristics can be improved.

The second particulate polymer may optionally further include other monomer units such as previously described to the extent that the objects of the present disclosure are not lost.

<Characteristics of second particulate polymer>

The glass-transition temperature of the second particulate polymer is preferably -50°C or higher, and more preferably -40°C or higher, and is preferably 10°C or lower, more preferably -15°C or lower, and even more preferably -25°C or lower.

When the glass-transition temperature of the second particulate polymer is not lower than any of the lower limits set forth above, inkjet ejection characteristics can be improved. On the other hand, when the glass-transition temperature of the second particulate polymer is not higher than any of the upper limits set forth above, the second particulate polymer can display good adhesiveness, and it is possible to form an adhesive layer for a non-aqueous secondary battery that more strongly adheres battery members to each other even through pressing at normal temperature.

Note that the glass-transition temperature of the second particulate polymer can be adjusted by altering the types and proportions of monomers used to produce the second particulate polymer, for example.

The volume-average particle diameter of the second particulate polymer is preferably 50 nm or more, more preferably 100 nm or more, and even more preferably 200 nm or more, and is preferably 600 nm or less, more preferably 500 nm or less, and even more preferably 400 nm or less.

When the volume-average particle diameter of the second particulate polymer is within any of the specific ranges set forth above, it is possible to form an adhesive layer for a non-aqueous secondary battery that even more strongly adheres battery members to each other even through pressing at normal temperature.

<Production method of second particulate polymer>

The second particulate polymer can be produced by, for example, polymerizing a monomer composition containing the monomers described above in an aqueous solvent such as water, for example, but is not specifically limited to being produced in this manner. The proportion constituted by each monomer in the monomer composition is normally the same as the proportion constituted by each monomer unit in the second particulate polymer. No specific limitations are placed on the polymerization method and the polymerization reaction. For example, commonly known polymerization methods and polymerization reactions such as emulsion polymerization and suspension polymerization can be adopted.

<Solvent>

Water, an organic solvent, or a mixture thereof, for example, can be used without any specific limitations as a solvent for dispersing the first particulate polymer and the second particulate polymer. The organic solvent is not specifically limited and may be an alicyclic hydrocarbon such as cyclopentane or cyclohexane; an aromatic hydrocarbon such as toluene or xylene; a ketone such as ethyl methyl ketone or cyclohexanone; an ester such as ethyl acetate, butyl acetate, γ-butyrolactone, or ε-caprolactone; a nitrile such as acetonitrile or propionitrile; an ether such as tetrahydrofuran or ethylene glycol diethyl ether; or an alcohol such as methanol, ethanol, isopropanol, ethylene glycol, propylene glycol, or ethylene glycol monomethyl ether. One solvent may be used individually, or two or more solvents may be used in combination in a freely selected ratio.

A mixture of water and an alcohol is preferably used as the solvent. When a mixture of water and an alcohol is used, this provides reliability such as ejection stability in a situation in which the composition is used in an inkjet recording device.

At least some of the solvent described above may be removed through drying or the like in a production step of a laminate for a non-aqueous secondary battery.

<Other components>

Examples of other components that are optionally contained in the presently disclosed composition for a non-aqueous secondary battery adhesive layer include, but are not specifically limited to, components such as surface tension modifiers, dispersants, viscosity modifiers, reinforcing materials, and additives for electrolyte solution. These other components are not specifically limited so long as they do not affect battery reactions and may be commonly known components such as any of those described in WO2012/115096A1, for example. One of these components may be used individually, or two or more of these components may be used in combination in a freely selected ratio.

(Production method of composition for non-aqueous secondary battery adhesive layer)

No specific limitations are placed on the method by which the presently disclosed composition for a non-aqueous secondary battery adhesive layer is produced. For example, the presently disclosed composition for a non-aqueous secondary battery adhesive layer can be produced by stirring and mixing the first particulate polymer, the second particulate polymer, and other optional components, preferably in the presence of a solvent. A known method can be adopted as the mixing and stirring method without any specific limitations. Specifically, a typical stirring vessel, ball mill, sand mill, bead mill, pigment disperser, ultrasonic disperser, grinding machine, homogenizer, planetary mixer, FILMIX, or the like can be used. Although no specific limitations are placed on the mixing conditions, mixing can normally be performed in a range of not lower than room temperature and not higher than 80°C for not less than 10 minutes and not more than several hours.

(Adhesive layer for non-aqueous secondary battery)

The presently disclosed adhesive layer for a non-aqueous secondary battery is an adhesive layer that is obtained using the presently disclosed composition for a non-aqueous secondary battery adhesive layer. Moreover, the presently disclosed adhesive layer for a non-aqueous secondary battery functions as an adhesive material for adhering battery members that are used in a non-aqueous secondary battery. Furthermore, the presently disclosed adhesive layer for a non-aqueous secondary battery can be obtained by the presently disclosed method of producing an adhesive layer for a non-aqueous secondary battery that is described further below, for example.

The presently disclosed adhesive layer for a non-aqueous secondary battery is a dried product obtained through drying of the presently disclosed composition for a non-aqueous secondary battery adhesive layer. Consequently, the presently disclosed adhesive layer for a non-aqueous secondary battery contains at least the first particulate polymer and the second particulate polymer and optionally contains other components.

Although the first particulate polymer and the second particulate polymer are each present in a particulate form in the composition for a non-aqueous secondary battery adhesive layer, the first particulate polymer and the second particulate polymer may have a particulate form or may have any other form in the adhesive layer for a non-aqueous secondary battery.

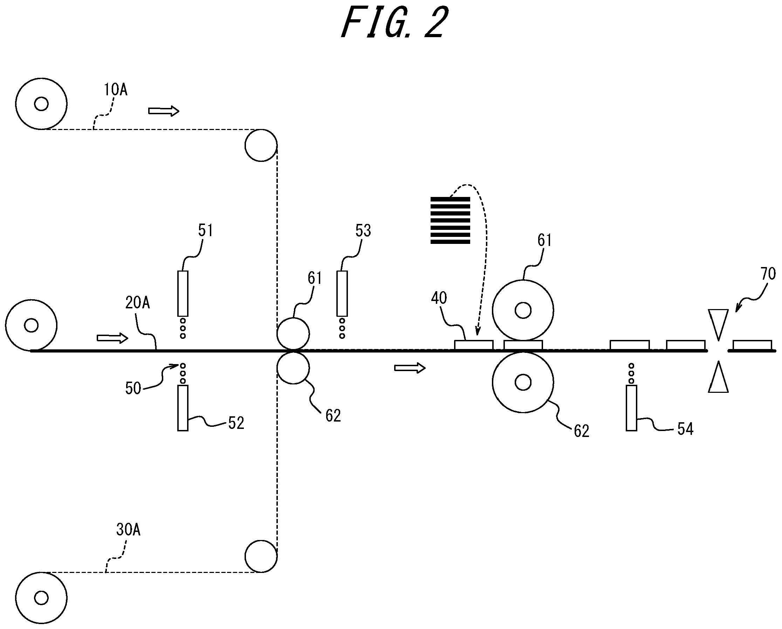

The adhesive layer can be formed with any plan-view shape such as a striped shape, a dotted shape, or a lattice shape without any specific limitations. In particular, it is preferable that the adhesive layer is formed with a dotted shape from a viewpoint of reducing resistance of a secondary battery. The dotted adhesive layer can be obtained by an inkjet method using a coating machine (51 to 54 in FIG. 2) such as described further below, for example.

The dot diameter of an adhesive layer that is arranged in a dotted pattern is preferably 10 $\mu$m or more, and more preferably 20 $\mu$m or more, and is preferably 300 $\mu$m or less, and more preferably 200 $\mu$m or less. When the dot diameter of the adhesive layer is not less than any of the lower limits set forth above, adhesive strength between an electrode and a separator can be increased. On the other hand, when the dot diameter of the adhesive layer is not more than any of the upper limits set forth above, deterioration of cycle characteristics of a secondary battery can be inhibited.

The dot thickness of the adhesive layer arranged in a dotted pattern is preferably 5 $\mu$m or more. When the dot thickness of the adhesive layer is not less than the lower limit set forth above, adhesive strength between an electrode and a separator can be increased.

The mass per unit area of the adhesive layer is preferably 0.02 g/m$^2$ or more, and is preferably 1.0 g/m$^2$ or

less, and more preferably 0.35 g/m$^2$ or less. When the mass per unit area of the adhesive layer is not less than the lower limit set forth above, adhesive strength between an electrode and a separator can be sufficiently ensured. Moreover, when the mass per unit area of the adhesive layer is not more than any of the upper limits set forth above, sufficiently high cycle characteristics of a secondary battery can be ensured.

A ratio of coverage of the adhesive layer is preferably 1% or more, and more preferably 5% or more, and is preferably 50% or less, and more preferably 30% or less. When the ratio of coverage of the adhesive layer is not less than any of the lower limits set forth above, adhesive strength between an electrode and a separator can be ensured. Moreover, when the ratio of coverage of the adhesive layer is not more than any of the upper limits set forth above, sufficiently high cycle characteristics of a secondary battery can be ensured.

The "ratio of coverage of the adhesive layer" at a given surface or region refers to the proportion occupied by the area of a portion that is covered by the adhesive layer among the overall area of the surface or region [i.e., (area of portion covered by adhesive layer/area of entire surface or region) × 100(%)].

Note that in a case in which a composition for an adhesive layer that contains the first particulate polymer, the second particulate polymer, and a solvent is used, the term "adhesive layer" in the "ratio of coverage of the adhesive layer" refers to a dried product of the composition for an adhesive layer.

The ratio of coverage of the adhesive layer can be adjusted by altering the arrangement pattern of the adhesive layer that is disposed (coated) in each region. Specifically, in a case in which the adhesive layer is arranged and disposed (coated) in a dotted pattern in a given region, the ratio of coverage of the adhesive layer in that region can be adjusted by altering the radius of dots and the distance between centers of dots of the adhesive layer. For example, in a region where the adhesive layer is disposed (coated) in a dotted pattern having dots formed at fixed intervals in two orthogonal directions, the ratio of coverage of the adhesive layer can be determined by the following formula (2) using the distances (pitches) x and y between centers of the dots and the radius r of the dots.

$$\text{Ratio of coverage of adhesive layer} = \{\pi r^2/(x \cdot y)\} \times 100(\%) \cdots (2)$$

(Method of producing adhesive layer for non-aqueous secondary battery)

The presently disclosed method of producing an adhesive layer for a non-aqueous secondary battery includes applying the presently disclosed composition for a non-aqueous secondary battery adhesive layer onto a substrate (application step) and drying the composition for a non-aqueous secondary battery adhesive layer that has been applied onto the substrate (drying step). Moreover, the presently disclosed method of producing an adhesive layer for a non-aqueous secondary battery may further include peeling the formed adhesive layer for a non-aqueous secondary battery from the substrate (peeling step) after the drying step.

In a case in which the adhesive layer for a non-aqueous secondary battery is formed on an electrode substrate or a separator substrate serving as the substrate, a laminate can be obtained by affixing the electrode substrate and the separator substrate in that form. Moreover, in a case in which the adhesive layer for a non-aqueous secondary battery is formed on a releasable substrate serving as the substrate, the adhesive layer for a non-aqueous secondary battery can be peeled from the releasable substrate and can subsequently be used to adhere an electrode substrate and a separator substrate.

<Application step>

In the application step, the presently disclosed composition for a non-aqueous secondary battery adhesive layer is applied onto a substrate such as an electrode substrate, a separator substrate, or a releasable substrate. The application method may be an inkjet method that is performed through a nozzle of a coating machine, for example. Since the presently disclosed composition for a non-aqueous secondary battery adhesive layer has excellent inkjet ejection characteristics, it is preferable that application is performed by an inkjet method. A conventional and commonly known inkjet-type coating machine can be used. For example, application can be performed using a coating machine (51 to 54 in FIG. 2) such as described further below. It is preferable that the composition for a non-aqueous secondary battery adhesive layer is applied onto an electrode substrate or a separator substrate from a viewpoint of production efficiency, and it is preferable that the composition for a non-aqueous secondary battery adhesive layer is applied onto an electrode substrate from a viewpoint of easily performing the drying step.

The application conditions by an inkjet method are not specifically limited so long as the composition for a non-aqueous secondary battery adhesive layer can be applied onto a substrate, and the conditions can be adjusted as appropriate depending on the desired form of the obtained adhesive layer (plan-view shape, dot diameter, dot thickness, dot pitch, ratio of coverage, mass per unit area, etc.).

{Electrode substrate}

A known electrode substrate can be used as the electrode substrate without any specific limitations. For example, an electrode formed of an electrode substrate having an electrode mixed material layer formed at one side or both sides of a current collector or an electrode having a porous membrane layer further formed on an electrode mixed material layer of an electrode substrate can be used as the electrode substrate.

Note that any current collector, electrode mixed material layer, and porous membrane layer that can be used in the field of secondary batteries, such as any of those described in JP2013-145763A, for example, can be used as the current collector, the electrode mixed material layer, and the porous membrane layer without any specific limitations.

{Separator substrate}

A known separator substrate such as an organic separator substrate can be used as the separator substrate without any specific limitations. The organic separator substrate is a porous member that is formed of an organic material. Examples of the organic separator substrate include microporous membranes and non-woven fabrics containing a polyolefin resin such as polyethylene or polypropylene, an aromatic polyamide resin, or the like, with a microporous membrane or non-woven fabric made of polyethylene being preferable due to the excellent strength thereof. Moreover, from a viewpoint of safety, a heat-resistant separator obtained by coating the above-described separator with a ceramic is preferable.

Furthermore, the separator substrate may have a porous membrane layer formed at one side or both sides. The term "porous membrane layer" refers to a layer containing non-conductive particles such as described in JP2013-145763A, for example.

{Releasable substrate}

A commonly known releasable substrate can be used as the releasable substrate without any specific limitations.

<Drying step>

In the drying step, the composition for an adhesive layer that has been applied onto the substrate is dried to form, on the substrate, an adhesive layer that is formed of a dried product of the composition for an adhesive layer. The drying can be performed by a commonly known method without any specific limitations. Examples of drying methods that may be used include drying using a heating device such as a heater, a dryer, or a heating roller. Although no specific limitations are placed on the drying conditions, the drying temperature is preferably not lower than 50°C and not higher than 90°C, and the drying time is preferably not less than 1 second and not more than 120 seconds.

<Peeling step>

In the peeling step, the adhesive layer for a non-aqueous secondary battery that has been formed on the substrate is peeled off. In a case in which the adhesive layer for a non-aqueous secondary battery has been formed on a releasable substrate, the adhesive layer can be peeled from the releasable substrate and can then be used in production of the subsequently described laminate for a non-aqueous secondary battery, for example.

(Laminate for non-aqueous secondary battery)

The presently disclosed laminate for a non-aqueous secondary battery is a laminate for a non-aqueous secondary battery that includes an electrode and a separator and in which the electrode and the separator are adhered via the presently disclosed adhesive layer for a non-aqueous secondary battery set forth above. The presently disclosed laminate for a non-aqueous secondary battery has excellent adhesiveness of battery members to each other as a result of the electrode and the separator being adhered via the presently disclosed adhesive layer for a non-aqueous secondary battery.

The electrode that is affixed to the separator to form the laminate for a non-aqueous secondary battery may be just a positive electrode, may be just a negative electrode, or may be both a positive electrode and a negative electrode. Moreover, in a case in which both a positive electrode and a negative electrode are affixed to the separator to obtain the laminate for a non-aqueous secondary battery, the number of positive electrodes, the number of negative electrodes, and the number of separators included in the laminate for a non-aqueous secondary battery may be 1 or may be 2 or more. In other words, the structure of the presently disclosed laminate for a non-aqueous secondary battery may be any of the following structures (1) to (6).

(1) Positive electrode/Separator

(2) Negative electrode/Separator

(3) Positive electrode/Separator/Negative electrode

(4) Positive electrode/Separator/Negative electrode/Separator

(5) Separator/Positive electrode/Separator/Negative electrode

(6) Structure in which positive electrodes and negative electrodes are stacked alternately with separators in-between (for example, "separator/negative electrode/separator/positive electrode/separator/negative electrode... /separator/positive electrode", etc.)

<Electrode>

A known electrode can be used as the electrode without any specific limitations. For example, an electrode such as previously described in the "Method of producing adhesive layer for non-aqueous secondary battery" section can be used.

<Separator>

A known separator can be used as the separator without any specific limitations. For example, a separator such as previously described in the "Method of producing adhesive layer for non-aqueous secondary battery" section can be used.

<Adhesive layer>

The adhesive layer that adheres the electrode and the separator is a dried product of the presently disclosed composition for a non-aqueous secondary battery adhesive layer. In other words, the dried product contains at least polymers originating from the first particulate polymer and the second particulate polymer and optionally contains other components such as previously described.

The preferred form of the adhesive layer (dot diameter, dot thickness, dot pitch, ratio of coverage, mass per unit area, etc.) is the same as previously described in the "Adhesive layer for non-aqueous secondary battery" section.

Although the first particulate polymer and the second particulate polymer are each present in a particulate form in the composition for a non-aqueous secondary battery adhesive layer, the first particulate polymer and the second particulate polymer may have a particulate form or may have any other form in the adhesive layer for a non-aqueous secondary battery of the laminate.

(Method of producing laminate for non-aqueous secondary battery)

The presently disclosed method of producing a laminate for a non-aqueous secondary battery includes supplying an adhesive material to an affixing surface (i.e., a surface where the adhesive material (adhesive layer) is to be formed) of at least one of an electrode and a separator (supply step) and pressing and affixing the electrode and the separator via the affixing surface to which the adhesive material has been supplied (affixing step). The presently disclosed method of producing a laminate for a non-aqueous secondary battery may include cutting the obtained affixed body (cutting step) after the affixing step.

<Supply step>

In the supply step, an adhesive material is supplied to an affixing surface of at least one of an electrode (positive electrode or negative electrode) and a separator. Supply of the adhesive material can be performed by applying the presently disclosed composition for a non-aqueous secondary battery adhesive layer by an inkjet method and then drying the composition for a non-aqueous secondary battery adhesive layer, for example, but is not specifically limited to being performed in this manner. Alternatively, supply of the adhesive material can be performed by transferring (stacking), onto the affixing surface, an adhesive layer for a non-aqueous secondary battery that has been obtained through peeling from a releasable substrate as previously described.

The conditions of the inkjet method are not specifically limited so long as the composition for a non-aqueous secondary battery adhesive layer can be applied, and the conditions can be adjusted as appropriate depending on the desired form of the obtained adhesive material (plan-view shape, dot diameter, dot thickness, dot pitch, ratio of coverage, mass per unit area, etc.).

In a case in which the composition for a non-aqueous secondary battery adhesive layer is applied by an inkjet method, the electrode and the separator can be conveyed to an affixing start position without bringing another member into contact with the affixing surface to which the composition for a non-aqueous secondary battery adhesive layer has been supplied, and the composition for a non-aqueous secondary battery adhesive layer can be dried during this conveying. By not bringing another member into contact with the affixing surface to which the composition for a non-aqueous secondary battery adhesive layer has been supplied, problems such as blocking do not occur, which makes it possible to efficiently produce a laminate for a secondary battery. In a case in which an adhesive layer for a non-aqueous secondary battery that has been obtained through peeling from a releasable substrate is supplied, it is not necessary to perform drying.

Note that the term "affixing start position" as used in the present specification refers to a position at which an affixing surface of the electrode and an affixing surface of the separator come into contact when the electrode and the separator are being affixed to each other.

The conveying of the electrode and the separator can be performed by any conveying mechanism such as a roller, a belt conveyor, a manipulator, or a suction band, for example, without any specific limitations. Of these examples, it is preferable that at least one of the electrode and the separator is conveyed by a roller from a viewpoint of further increasing production efficiency of a laminate for a secondary battery.

Moreover, drying of the composition for a non-aqueous secondary battery adhesive layer can be performed using a heating device such as a heater, a dryer, or a heating roller without any specific limitations. The temperature during drying of the electrode and/or separator to which the composition for a non-aqueous secondary battery adhesive layer has been supplied is not specifically limited but is preferably not lower than 50°C and not higher than 90°C. Moreover, the drying time is not specifically limited but is preferably not less than 1 second and not more than 120 seconds.

<Affixing step>

In the affixing step, the electrode and the separator are affixed via the affixing surface. The affixing is performed through pressing of a laminate in which the electrode and the separator are stacked with the affixing surface in-between.

The pressing temperature of the laminate is not specifically limited so long as it is a temperature at which the electrode and the separator can be affixed, but is preferably 0°C or higher, more preferably 10°C or higher, and even more preferably 20°C or higher, and is preferably 35°C or lower, more preferably 30°C or lower, and even more preferably 25°C or lower.

When the pressing temperature of the laminate is not lower than any of the lower limits set forth above, adhesiveness of battery members to each other can be improved. On the other hand, when the pressing temperature of the laminate is not higher than any of the upper limits set forth above, laminate production efficiency can be increased.

The pressing of the laminate is preferably performed with a pressure of 0.1 MPa or more, and more preferably 0.5 MPa or more, and is preferably performed with a pressure of 5 MPa or less.

When the pressing of the laminate is performed with a pressure that is not less than any of the lower limits set forth above, adhesiveness of battery members to each other can be improved. On the other hand, when the pressing of the laminate is performed with a pressure that is not more than the upper limit set forth above, deformation of the laminate (crushing of an electrode mixed material layer or separator, etc.) can be effectively inhibited.

The pressing time of the laminate is preferably 20 seconds or less, and more preferably 15 seconds or less.

When the pressing time of the laminate is not more than any of the upper limits set forth above, laminate production efficiency can be increased.

<Cutting step>

The cutting step is a step of cutting the affixed body obtained in the affixing step to desired dimensions. The cutting can, for example, be performed using any cutting machine that can be used in the field of secondary battery production, such as a cutting machine that sandwiches and cuts an affixed body through cutting blades from both sides in a thickness direction of the affixed body.

{Electrode and separator}

A known electrode and a known separator can be used as the electrode and the separator without any specific limitations. For example, an electrode and a separator such as previously described in the "Method of producing adhesive layer for non-aqueous secondary battery" section can be used.

{Adhesive material}

The adhesive material that adheres the electrode and the separator is a dried product of the presently disclosed composition for a non-aqueous secondary battery adhesive layer. In other words, this dried product contains at least polymers originating from the first particulate polymer and the second particulate polymer and optionally contains other components such as previously described.

The preferred form of the adhesive material (dot diameter, dot thickness, dot pitch, ratio of coverage, mass per unit area, etc.) is the same as previously described in the "Adhesive layer for non-aqueous secondary battery" section.

Although the first particulate polymer and the second particulate polymer are each present in a particulate form in the composition for a non-aqueous secondary battery adhesive layer, the first particulate polymer and the second particulate polymer may have a particulate form or may have any other form in an adhesive layer for a non-aqueous secondary battery of the laminate after pressing.

The following describes one example of a production process of the presently disclosed laminate for a non-aqueous secondary battery with reference to FIG. 2.

With reference to FIG. 2, an elongated first separator web 10A that has been fed from a first separator web roll is affixed to one surface of a negative electrode material formed of an elongated negative electrode web 20A that has been fed from a negative electrode web roll via an adhesive material that has been supplied from a coating machine 51. Together therewith, an elongated second separator web 30A that has been fed from a second separator web roll is affixed to the other surface of the negative electrode material formed of the negative electrode web 20A via an adhesive material that has been supplied from a coating machine 52. Note that the affixing can be performed using pressure bonding rollers 61 and 62, for example. Positive electrodes 40 are affixed at a specific arrangement pitch to a surface of the first separator web 10A at the opposite side thereof to the negative electrode web 20A via an adhesive material that has been supplied from a coating machine 53, and thus an affixed body that includes a positive electrode is obtained. Note that in FIG. 2, an adhesive material is supplied from a coating machine 54 to a surface of the second separator web 30A at the opposite side thereof to the negative electrode web 20A so that when laminates obtained by cutting the affixed body between positive electrodes 40 that are adjacent in the longitudinal direction are stacked in order to produce a stack, the laminates can be adhered well to each other. The affixed body is cut using a cutting machine 70 to obtain a laminate.

(Non-aqueous secondary battery)

The presently disclosed non-aqueous secondary battery includes the presently disclosed laminate for a non-aqueous secondary battery. For example, the presently disclosed non-aqueous secondary battery may include electrodes (positive electrode and negative electrode), an electrolyte solution, and a separator. At least one of the positive electrode and the negative electrode is affixed to the separator via the presently disclosed adhesive layer for a non-aqueous secondary battery to form the presently disclosed laminate for a non-aqueous secondary battery. The presently disclosed non-aqueous secondary battery has excellent adhesiveness of battery members to each other as a result of including the presently disclosed laminate for a non-aqueous secondary battery.

<Electrodes>

Known electrodes can be used as the electrodes that are used in the presently disclosed secondary battery without any limitations. For example, an electrode such as previously described in the "Method of producing adhesive layer for non-aqueous secondary battery" section can be used.

<Separator>

A known separator can be used as the separator that is used in the presently disclosed secondary battery without any limitations. For example, a separator such as previously described in the "Method of producing adhesive layer for non-aqueous secondary battery" section can be used.

<Electrolyte solution>

An organic electrolyte solution obtained by dissolving a supporting electrolyte in an organic solvent is normally used as the electrolyte solution that is used in the presently disclosed secondary battery. For example, when the non-aqueous secondary battery is a lithium ion secondary battery, a lithium salt is used as the supporting electrolyte. Examples of lithium salts that can be used include $LiPF_6$, $LiAsF_6$, $LiBF_4$, $LiSbF_6$, $LiAlCl_4$, $LiClO_4$, $CF_3SO_3Li$, $C_4F_9SO_3Li$, $CF_3COOLi$, $(CF_3CO)_2NLi$, $(CF_3SO_2)_2NLi$, and $(C_2F_5SO_2)NLi$. Of these lithium salts, $LiPF_6$, $LiClO_4$, and $CF_3SO_3Li$ are preferable because they readily dissolve in solvents and exhibit a high degree of dissociation, with $LiPF_6$ being particularly preferable. One electrolyte may be used individually, or two or more electrolytes may be used in combination in a freely selected ratio. In general, lithium ion conductivity tends to increase when a supporting electrolyte having a high degree of dissociation is used. Therefore, lithium ion conductivity can be adjusted through the type of supporting electrolyte.

The organic solvent used in the electrolyte solution is not specifically limited so long as the supporting electrolyte can dissolve therein. Examples of organic solvents that can suitably be used include carbonates such as dimethyl carbonate (DMC), ethylene carbonate (EC), diethyl carbonate (DEC), propylene carbonate (PC), butylene carbonate (BC), and ethyl methyl carbonate (EMC); esters such as γ-butyrolactone and methyl formate; ethers such as 1,2-dimethoxyethane and tetrahydrofuran; and sulfur-containing compounds such as sulfolane and dimethyl sulfoxide. Furthermore, a mixture of such solvents may be used. Of these solvents, carbonates are preferable due to having a high permittivity and a wide stable potential region, and a mixture of ethylene carbonate and ethyl methyl carbonate is more preferable.

Moreover, a known additive such as vinylene carbonate (VC), fluoroethylene carbonate (FEC), or ethyl methyl sulfone may be added to the electrolyte solution.

(Production method of non-aqueous secondary battery)

The presently disclosed non-aqueous secondary battery can be produced by, for example, performing rolling, folding, or the like of a stack obtained through stacking of the laminate, as necessary, in accordance with the battery shape, placing the stack in a device container (battery container), injecting the electrolyte solution into the device container, and sealing the device container. The laminate itself may be used as the stack, or a plurality of the laminate may be stacked to produce the stack. Moreover, the stack may be produced by stacking an additional battery member (electrode and/or separator, etc.) with the laminate. The presently disclosed secondary battery may be provided with an overcurrent preventing device such as a fuse or a PTC device, an expanded metal, a lead plate, or the like, as necessary, in order to prevent pressure increase inside the secondary battery and occurrence of overcharging or overdischarging. The shape of the secondary battery may be a coin type, button type, sheet type, cylinder type, prismatic type, flat type, or the like, for example.

EXAMPLES

The following provides a more specific description of the present disclosure based on examples. However, the present disclosure is not limited to the following examples. In the following description, "%" and "parts" used in expressing quantities are by mass, unless otherwise specified.

Moreover, in the case of a polymer that is produced through copolymerization of a plurality of types of monomers, the proportion in the polymer constituted by a monomer unit that is formed through polymerization of a given monomer is normally, unless otherwise specified, the same as the ratio (charging ratio) of the given monomer among all monomers used in polymerization of the polymer.

Various measurements and evaluations in the examples and comparative examples were performed by the following methods.

<Glass-transition temperature>

A water dispersion of a first particulate polymer or a water dispersion of a second particulate polymer produced in each production example was dried at a temperature of 130°C for 1 hour to obtain a sample. The measurement sample was weighed into an aluminum pan in an amount of 10 mg and was measured by a differential scanning calorimeter (EXSTAR DSC6220 produced by SII NanoTechnology Inc.) under conditions prescribed by JIS Z8703 with a measurement temperature range of -100°C to 200°C and a heating rate of 10°C/min to obtain a differential scanning calorimetry (DSC) curve. Note that an empty aluminum pan was used as a reference. In the heating process, an intersection point of a baseline directly before a heat absorption peak on the DSC curve at which a derivative signal (DDSC) reached 0.05 mW/min/mg or more and a tangent to the DSC curve at a first inflection point to appear after the heat absorption peak was determined as the glass-transition temperature (°C).

<Volume-average particle diameter>

The volume-average particle diameter of a first particulate polymer or second particulate polymer produced in each production example was measured by laser diffraction. Specifically, in a particle size distribution (by volume) obtained using a laser diffraction particle size analyzer (produced by Beckman Coulter, Inc.; product name: LS-13 320) with a water dispersion (solid content concentration: 0.1 mass%) containing the produced first particulate polymer or second particulate polymer as a sample, the particle diameter at which cumulative volume calculated from a small diameter end of the distribution reached 50% was determined and was taken to be the volume-average particle diameter D50 (nm).

<Adhesive strength between electrode and separator>

A negative electrode coated with an adhesive layer (adhesive material) at one side under the same conditions as in each example or comparative example and a separator were pressed under conditions of a temperature of 25°C and a pressure of 1 MPa for 10 seconds and were affixed. The affixed laminate (i.e., a laminate in which one negative electrode and one separator were affixed via an adhesive material) was sampled to obtain a test specimen.

This test specimen was placed with the surface at the current collector-side of the negative electrode facing downward, and cellophane tape was affixed to the surface at the current collector-side of the negative electrode. Tape prescribed by JIS Z1522 was used as the cellophane tape. Moreover, the cellophane tape was fixed to a horizontal test stage in advance. One end of the separator was pulled vertically upward at a pulling speed of 50 mm/min to peel off the separator, and the stress during this peeling was measured.

A total of 6 measurements were made in this manner. An average value of the stress was determined as the peel strength, and adhesiveness between the negative electrode and the separator was evaluated by the following standard. A larger peel strength indicates higher adhesiveness between the electrode (negative electrode) and the separator.

A: Peel strength of 5.0 N/m or more
B: Peel strength of not less than 4.0 N/m and less than 5.0 N/m
C: Peel strength of not less than 3.0 N/m and less than 4.0 N/m
D: Peel strength of not less than 2.0 N/m and less than 3.0 N/m
E: Peel strength of not less than 1.0 N/m and less than 2.0 N/m
F: Peel strength of less than 1.0 N/m

<Inkjet ejection characteristics>

An ejection test was performed for a composition for a non-aqueous secondary battery adhesive layer produced in each example or comparative example using a high performance head mounted ejection test kit (IJK-200S produced by MICROJET Corporation). Ejection characteristics were evaluated by the following standard.

A: Ejection possible and possible again even after 5 minutes or more of resting time
B: Ejection possible but not possible again after 5 minutes of resting time
C: Ejection not possible

<Cycle characteristics>

A produced lithium ion secondary battery was constant-current constant-voltage (CCCV) charged to 4.3 V in an atmosphere having a temperature of 25°C for cell preparation. The prepared cell was discharged to 3.0 V by 0.2C and 1C constant-current methods in an atmosphere having a temperature of -10°C, and the electric capacity was determined for each thereof. A discharge capacity maintenance rate expressed by the ratio of the electric capacities was determined (= (electric capacity at 1C/electric capacity at 0.2C) × 100(%)). These measurements were performed for 5 lithium ion secondary battery cells, and an average value for these cells was taken to be the discharge capacity maintenance rate.

Next, these lithium ion secondary batteries were each tightened in a pressing jig such that the surface pressure was 1 MPa and were each subsequently subjected to a cycling test at 45°C. The cycling test conditions were set as 500 charge/discharge cycles of 1C CC+CV charging (4.3 V, 1/50C cut) and 1C CC discharging (3.0 V cut). Thereafter, the lithium ion secondary battery was cooled to 25°C while still tightened in the pressing jig, and the discharge capacity maintenance rate was determined in the same manner as described above. A maintenance rate (%) between before and after cycling was calculated for the discharge capacity maintenance rate (= discharge capacity maintenance rate after cycling test/discharge capacity maintenance rate before cycling test × 100) and was evaluated by the following standard. A larger maintenance rate between before and after cycling indicates a smaller increase of resistance in the cycling test, and thus indicates better cycle characteristics.

A: Maintenance rate of 80% or more
B: Maintenance rate of not less than 60% and less than 80%
C: Maintenance rate of not less than 40% and less than 60%
D: Maintenance rate of less than 40%

(Production Example 1)

<Production of first particulate polymer 1>

A reactor including a stirrer was supplied with 100 parts of deionized water and 0.1 parts of ammonium persulfate. The gas phase was purged with nitrogen gas, and the temperature was raised to 80°C. Meanwhile, a monomer composition for core portion formation was obtained in a separate vessel by mixing 40 parts of deionized water, 0.2 parts of sodium dodecylbenzenesulfonate as an emulsifier, 90.9 parts of n-butyl acrylate as a (meth)acrylate monomer including a chain alkyl group having a carbon number of 4 or more, 2 parts of methacrylic acid as a hydrophilic group-containing monomer, 0.1 parts of ethylene glycol dimethacrylate as a cross-linkable monomer, and 2 parts of acrylonitrile as a nitrile group-containing monomer. This monomer composition for core portion formation was continuously added into the reactor over 3 hours so as to perform a polymerization reaction at a temperature of 80°C. Polymerization was continued until a polymerization conversion rate of 95% was reached to yield a water dispersion containing a particulate polymer forming a core portion. Next, a monomer composition for shell portion formation containing 4.75 parts of styrene as an aromatic monovinyl monomer and 0.25 parts of methacrylic acid as a hydrophilic group-containing monomer was continuously supplied into this water dispersion over 60 minutes, and polymerization was continued. At the point at which the polymerization conversion rate reached 98%, cooling was performed to quench the reaction to thereby produce a water dispersion containing a first particulate polymer 1.

The volume-average particle diameter and glass-transition temperature of the obtained first particulate polymer 1 were measured. The results are shown in Table 1.

Upon observation of the cross-sectional structure of the first particulate polymer 1 using a transmission electron microscope (TEM), the first particulate polymer 1 was confirmed to have a core-shell structure in which a shell portion partially covered the outer surface of a core portion.

(Production Examples 2 to 15)

<Production of first particulate polymers 2 to 15>

Water dispersions of first particulate polymers 2 to 15 having a core-shell structure were produced in the same way as in production of the first particulate polymer 1 with the exception that the types and used amounts of monomers were changed as shown in Table 1. Moreover, various measurements, etc. were performed in the same way as in Production Example 1. The results are shown in Table 1.

(Production Example 16)

<Production of second particulate polymer 1>

A reactor including a stirrer was supplied with 90 parts of deionized water, 0.05 parts of sodium dodecylbenzenesulfonate (NEOPELEX G-15 produced by Kao Corporation) as an emulsifier, and 0.23 parts of ammonium persulfate. The gas phase was purged with nitrogen gas, and the temperature was raised to 70°C.

Meanwhile, a monomer composition was obtained in a separate vessel by mixing 50 parts of deionized water, 0.1 parts of sodium dodecylbenzenesulfonate as an emulsifier, 93.8 parts of n-butyl acrylate as a (meth)acrylate monomer including a chain alkyl group having a carbon number of 4 or more, 2 parts of methacrylic acid as a hydrophilic group-containing monomer, 1.2 parts of N-methylolacrylamide and 1 part of allyl glycidyl ether as cross-linkable monomers, and 2 parts of acrylonitrile as a nitrile group-containing monomer. This monomer composition was continuously added into the reactor over 4 hours so as to perform polymerization. The reaction was carried out at 80°C during the addition. Once the addition was complete, a further 3 hours of stirring was performed at 80°C, and then the reaction was ended to produce a water dispersion containing a second particulate polymer 1 that did not have a core-shell structure. Moreover, various measurements, etc. were performed in the same way as in Production Example 1. The results are shown in Table 2.

(Production Examples 17 to 28)

<Production of second particulate polymers 2 to 13>

Water dispersions of second particulate polymers 2 to 13 that did not have a core-shell structure were produced in the same way as in production of the second particulate polymer 1 with the exception that the types and used amounts of monomers were changed as shown in Table 2. Moreover, various measurements, etc. were performed in the same way as in Production Example 1. The results are shown in Table 2.

In Tables 1 and 2, shown below:

"BA" indicates n-butyl acrylate;

"2EHA" indicates 2-ethylhexyl acrylate;

"DA" indicates n-dodecyl acrylate;

"PA" indicates n-propyl acrylate;

"MAA" indicates methacrylic acid;

"EDMA" indicates ethylene glycol dimethacrylate;

"AN" indicates acrylonitrile;

"St" indicates styrene;

"AA" indicates acrylic acid;

"AMA" indicates allyl methacrylate;

"N-MA" indicates N-methylolacrylamide;

"AGE" indicates allyl glycidyl ether;

"EA" indicates ethyl acrylate;

"Aam" indicates acrylamide;

"Proportion A" indicates proportion constituted by (meth)acrylate monomer unit including chain alkyl group having carbon number of 4 or more in first particulate polymer;

"Proportion $\alpha$" indicates proportion constituted by (meth)acrylate monomer unit including chain alkyl group having carbon number of 4 or more in polymer of core portion;

"Tg" indicates glass-transition temperature; and

"Proportion B" indicates proportion constituted by (meth)acrylate monomer unit including chain alkyl group having carbon number of 4 or more in second particulate polymer.

[Table 1]

| | | | Production Example | | | | | | | | | | | | | | |
|---|---|---|---|---|---|---|---|---|---|---|---|---|---|---|---|---|---|
| | | | 1 | 2 | 3 | 4 | 5 | 6 | 7 | 8 | 9 | 10 | 11 | 12 | 13 | 14 | 15 |
| First particulate polymer no. | | | 1 | 2 | 3 | 4 | 5 | 6 | 7 | 8 | 9 | 10 | 11 | 12 | 13 | 14 | 15 |
| Chemical composition [mass%] | Core portion | BA | 90.9 | - | - | - | 80.8 | 75.4 | - | 90.9 | 94.9 | 75.9 | 90.9 | 72.9 | - | - | - |
| | | 2EHA | - | 90.9 | - | 85.0 | - | - | 80.6 | - | - | - | - | - | 72.9 | - | 61.5 |
| | | DA | - | - | 90.9 | - | - | - | - | - | - | - | - | - | - | - | - |
| | | PA | - | - | - | - | - | - | - | - | - | - | - | - | - | 90.9 | - |
| | | MAA | 2.0 | 2.0 | 2.0 | 3.0 | 2.0 | 2.0 | 3.0 | 2.0 | 2.0 | 2.0 | 2.0 | 2.0 | 3.0 | 2.0 | 3.0 |
| | | EDMA | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 |
| | | AN | 2.0 | 2.0 | 2.0 | - | 2.0 | 2.0 | - | 2.0 | 2.0 | 2.0 | - | 2.0 | 2.0 | 2.0 | 2.0 |
| | | st | - | - | - | 6.9 | 10.1 | 18.5 | 11.3 | - | - | - | 2.0 | 18.0 | 17.0 | - | 28.4 |
| | Shell portion | st | 4.75 | 4.75 | 4.75 | 4.75 | 4.75 | 1.90 | 4.75 | 3.00 | 0.95 | 19.00 | 4.75 | 4.75 | 4.75 | 4.75 | 4.75 |
| | | BA | - | - | - | - | - | - | - | 1.87 | - | - | - | - | - | - | - |
| | | MAA | 0.25 | 0.25 | 0.25 | 0.25 | 0.25 | 0.10 | 0.25 | 0.13 | 0.05 | 1.00 | 0.25 | 0.25 | 0.25 | 0.25 | 0.25 |
| | | | | | | | | | | | | | | | | | |
| Value of proportion A [mass%] | | | 90.9 | 90.9 | 90.9 | 85.0 | 80.8 | 75.4 | 80.6 | 90.9 | 94.9 | 75.9 | 90.9 | 72.9 | 72.9 | 0.0 | 61.5 |
| Value of proportion α [mass%] | | | 95.7 | 95.7 | 95.7 | 89.5 | 85.1 | 76.9 | 84.8 | 95.7 | 95.9 | 94.9 | 95.7 | 76.7 | 76.7 | 0.0 | 64.7 |
| Mass proportion of shell portion in first particulate polymer [mass%] | | | 5 | 5 | 5 | 5 | 5 | 2 | 5 | 5 | 1 | 20 | 5 | 5 | 5 | 5 | 5 |
| Physical properties | Tg [°C] | Core portion | -40 | -46 | -13 | -46 | -27 | -18 | -41 | -40 | -40 | -40 | -40 | -18 | -28 | -32 | -18 |
| | | Stell portion | 105 | 105 | 105 | 105 | 105 | 105 | 105 | 40 | 105 | 105 | 105 | 105 | 105 | 105 | 105 |
| | Particle diameter D50 [nm] | | 400 | 400 | 400 | 400 | 400 | 395 | 400 | 400 | 392 | 450 | 400 | 400 | 400 | 400 | 395 |

[Table 2]

| | | | Production Examples | | | | | | | | | | | | |
|---|---|---|---|---|---|---|---|---|---|---|---|---|---|---|---|
| | Second particulate polymer no. | | 16 | 17 | 18 | 19 | 20 | 21 | 22 | 23 | 24 | 25 | 26 | 27 | 28 |
| | | | 1 | 2 | 3 | 4 | 5 | 6 | 7 | 8 | 9 | 10 | 11 | 12 | 13 |
| Chemical composition [mass%] | | BA | 93.8 | 79.9 | 84.8 | - | - | - | - | 73.0 | 93.8 | - | 73.0 | - | - |
| | | 2EHA | - | - | - | 94.0 | - | 77.8 | 70.1 | - | - | - | - | 73.0 | 62.0 |
| | | DA | - | - | - | - | 93.8 | - | - | - | - | - | - | - | - |
| | | PA | - | - | - | - | - | - | - | - | - | 93.8 | - | - | - |
| | | AA | - | - | - | - | - | - | 3.0 | - | - | - | - | 3.0 | 3.0 |
| | | MAA | 2.0 | 2.3 | 4.8 | 2.0 | 2.0 | 2.0 | - | 2.5 | 2.0 | 2.0 | 2.5 | - | - |
| | | EDMA | - | - | 0.1 | - | - | - | - | - | - | - | - | - | - |
| | | AMA | - | - | - | 0.2 | - | 0.2 | 0.2 | 0.2 | - | - | 0.2 | 0.2 | 0.3 |
| | | N-MA | 1.2 | 3.8 | 1.4 | - | 1.2 | - | - | - | 1.2 | 1.2 | - | - | - |
| | | AGE | 1.0 | - | - | - | 1.0 | - | 1.7 | - | 1.0 | 1.0 | - | 1.7 | 1.7 |
| | | AN | 2.0 | 12.5 | 1.8 | 3.8 | 2.0 | 20.0 | - | 2.0 | - | 2.0 | 2.0 | 2.0 | 2.0 |
| | | st | - | - | - | - | - | - | 25.0 | 22.3 | 2.0 | - | 20.3 | 20.1 | 31.0 |
| | | EA | - | - | 5.7 | - | - | - | - | - | - | - | - | - | - |
| | | Aam | - | 1.5 | 1.4 | - | - | - | - | - | - | - | 2.0 | - | - |
| Physical properties | Value of proportion B [mass%] | | 93.8 | 79.9 | 84.8 | 94.0 | 93.8 | 77.8 | 70.1 | 73.0 | 93.8 | 0.0 | 73.0 | 73.0 | 62.0 |
| | Tg [°C] | | -38 | -15 | -29 | -32 | -12 | -32 | -29 | -13 | -38 | -31 | -13 | -29 | -13 |
| | Particle diameter D50 [nm] | | 350 | 200 | 465 | 200 | 351 | 200 | 180 | 200 | 200 | 300 | 200 | 180 | 200 |

(Example 1)

<Production of composition for non-aqueous secondary battery adhesive layer>

The water dispersion of the first particulate polymer 1 obtained in Production Example 1 and the water dispersion of the second particulate polymer 1 obtained in Production Example 16 were mixed such as to give a solid content mass ratio of 100:10 and were diluted to a solid content concentration of 10.5% through addition of deionized water. Propylene glycol was further added to the resultant mixture so as to adjust the solid content concentration to 10% and yield a composition for a non-aqueous secondary battery adhesive layer. The obtained composition for an adhesive layer was used to evaluate adhesive strength between an electrode and a separator and inkjet ejection characteristics. The results are shown in Table 3.

<Production of negative electrode web>

A 5 MPa pressure-resistant vessel equipped with a stirrer was charged with 33 parts of 1,3-butadiene, 3.5 parts of itaconic acid, 63.5 parts of styrene, 0.4 parts of sodium dodecylbenzenesulfonate as an emulsifier, 150 parts of deionized water, and 0.5 parts of potassium persulfate as a polymerization initiator. These materials were thoroughly stirred and were then heated to a temperature of 50°C so as to initiate polymerization. At the point at which the polymerization conversion rate reached 96%, cooling was performed to quench the reaction to yield a mixture containing a binder (SBR) for a negative electrode mixed material layer. The mixture containing the binder for a negative electrode mixed material layer was adjusted to pH 8 through addition of 5% sodium hydroxide aqueous solution and was then subjected to thermal-vacuum distillation to remove unreacted monomer. Thereafter, the mixture was cooled to a temperature of 30°C or lower to yield a water dispersion containing the desired binder for a negative electrode mixed material layer.

Next, 100 parts of artificial graphite (volume-average particle diameter: 15.6 μm) as a negative electrode active material, 1 part in terms of solid content of a 2% aqueous solution of a sodium salt of carboxymethyl cellulose (produced by Nippon Paper Industries Co., Ltd.; product name: MAC350HC) as a viscosity modifier, and deionized water were mixed, were adjusted to a solid content concentration of 68%, and were subsequently further mixed at a temperature of 25°C for 60 minutes. The solid content concentration was further adjusted to 62% with deionized water, and then a further 15 minutes of mixing was performed at a temperature of 25°C. Deionized water and 1.5 parts in terms of solid content of the water dispersion containing the binder for a negative electrode mixed material layer described above were added to the resultant mixture, the final solid content concentration was adjusted to 52%, and a further 10 minutes of mixing was performed. The resultant mixture was subjected to defoaming under reduced pressure to yield a slurry composition for a non-aqueous secondary battery negative electrode having good fluidity.

The obtained slurry composition for a non-aqueous secondary battery negative electrode was applied onto both sides of copper foil of 20 μm in thickness serving as a current collector by a comma coater such as to have a thickness after drying of approximately 150 μm. The slurry composition was dried by conveying the copper foil inside an oven having a temperature of 60°C for 2 minutes at a speed of 0.5 m/min. Thereafter, 2 minutes of heat treatment was performed at a temperature of 120°C to obtain a pre-pressing negative electrode web. The pre-pressing negative electrode web was rolled by roll pressing to obtain a post-pressing negative electrode web having a negative electrode mixed material layer thickness of 80 μm.

<Production of positive electrode web>

A slurry composition for a non-aqueous secondary battery positive electrode was obtained by mixing 100 parts of LiCoO$_2$ having a volume-average particle diameter of 12 μm as a positive electrode active material, 2 parts of acetylene black (produced by Denka Company Limited; product name: HS-100) as a conductive material, 2 parts in terms of solid content of polyvinylidene fluoride (produced by Kureha Corporation; product name: #7208) as a binder, and N-methylpyrrolidone as a solvent, adjusting the total solid content concentration to 70%, and mixing these materials using a planetary mixer.

The obtained slurry composition for a non-aqueous secondary battery positive electrode was applied onto both sides of aluminum foil of 20 μm in thickness serving as a current collector by a comma coater such as to have a thickness after drying of approximately 150 μm. The slurry composition was dried by conveying the aluminum foil inside of an oven having a temperature of 60°C for 2 minutes at a speed of 0.5 m/min. Thereafter, 2 minutes of heat treatment was performed at a temperature of 120°C to obtain a positive electrode web.

The obtained positive electrode web was rolled using a roll press to obtain a post-pressing positive electrode web including positive electrode mixed material layers.

<Preparation of separator web>

A separator web (produced by Asahi Kasei Corporation; product name: ND412) made of polyethylene (PE) was prepared.

<Production of laminate>

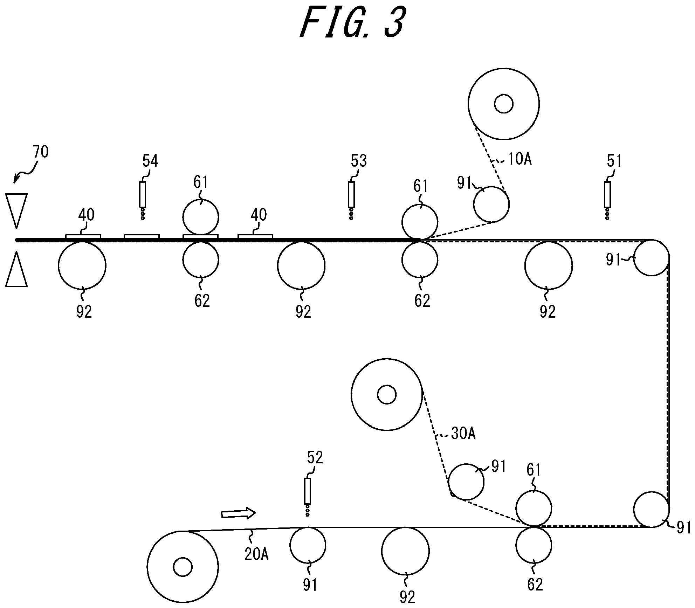

The produced composition for an adhesive layer, negative electrode web, positive electrode web, and separator web were used to produce a laminate as illustrated in FIG. 3. Note that in FIG. 3, reference sign 91 indicates a conveying roller and reference sign 92 indicates a heating roller.

Specifically, a negative electrode web 20A fed from a negative electrode web roll was conveyed at a speed of 10 m/min while a composition for an adhesive layer was supplied onto one surface of the negative electrode web 20A from an inkjet head of an inkjet-type coating machine 52 (KM1024 (shear-mode type) produced by Konica) and a second separator web 30A fed from a separator web roll was affixed to the negative electrode web 20A by pressure bonding rollers 61 and 62. The composition for an adhesive layer was also supplied onto the other surface of the negative electrode web 20A from an inkjet head of an inkjet-type coating machine 51 (KM1024 (shear-mode type) produced by Konica), and a first separator web 10A fed from a separator web roll was affixed to the laminate of the negative electrode web 20A and the second separator web 30A by pressure bonding rollers 61 and 62. The composition for an adhesive layer was also supplied onto a surface at the opposite side of the first separator web 10A to the negative electrode web 20A from an inkjet head of an inkjet-type coating machine 53 (KM1024 (shear-mode type) produced by Konica), a pre-cut positive electrode 40 was placed thereon, and then the positive electrode 40 was affixed to the laminate of the first separator web 10A, the negative electrode web 20A, and the second separator web 30A by pressure bonding rollers 61 and 62. Moreover, the composition for an adhesive layer was supplied onto the positive electrode 40 from an inkjet head of an inkjet-type coating machine 54 (KM1024 (shear-mode type) produced by Konica), and then cutting was performed by a cutting machine 70 to obtain a laminate in which a second separator, a negative electrode, a first separator, and a positive electrode were stacked in this order. Note that a section where an electrode mixed material layer (positive electrode mixed material layer or negative electrode mixed material layer) was not formed was provided at an edge part of the current collector of each of the positive electrode 40 and the negative electrode web 20A, punching was performed such that a tab of a desired size was formed in advance, and stacking was performed such that a positive electrode tab and a negative electrode tab were disposed at the same edge side of affixing surfaces X and Y of the electrodes and separators.

Note that affixing using pressure bonding rollers 61 and 62 was performed at a temperature of 25°C and a pressure of 1 MPa.

Moreover, the supplied composition for an adhesive layer was dried (drying temperature: 70°C; drying time: 1 second) by using heating rollers 92 for some of conveying rollers 91.

Furthermore, supply of the composition for an adhesive layer from the coating machines 51 to 54 was performed such that the composition for an adhesive layer had a uniform dotted pattern. The dot size was 100 μm in diameter with intervals between the dots set as 400 μm pitch. The mass per unit area of adhesive material was 0.2 g/m². Moreover, the ratio of coverage was measured and was determined to be 6.5%.

<Production of secondary battery>

A stack was produced by stacking five laminates produced as described above and performing 10 seconds of pressing at a temperature of 25°C and a pressure of 2 MPa. This stack was enclosed in an aluminum packing case serving as a case, and then electrolyte solution (solvent: ethylene carbonate/diethyl carbonate/vinylene carbonate = 68.5/30/1.5 (volume ratio); electrolyte: LiPF$_6$ of 1 M in concentration) was injected. An opening of the aluminum packing case was subsequently closed by heat sealing at a temperature of 150°C to produce a stacked lithium ion secondary battery having a capacity of 800 mAh. Cycle characteristics of the obtained secondary battery were evaluated. The result is shown in Table 3.

(Examples 2 to 15 and Comparative Examples 1 to 6)

Various operations, measurements, and evaluations were performed in the same way as in Example 1 with the exception that the type of first particulate polymer, the type of second particulate polymer, and the ratio in which these particulate polymers were used was changed as shown in Table 3. The results are shown in Table 3.

In Table 3, shown below:

"Proportion X" indicates proportional content of first particulate polymer among total mass of first particulate polymer and second particulate polymer; and

"Proportion Y" indicates proportional content of second particulate polymer among total mass of first particulate polymer and second particulate polymer.

[Table 3]

| | | Example | | | | | | | | | | | | | | | Comparative Example | | | | | |
|---|---|---|---|---|---|---|---|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 | 15 | 1 | 2 | 3 | 4 | 5 | 6 |
| Type of particulate polymer | First particulate polymer | 1 | 1 | 1 | 2 | 3 | 4 | 1 | 1 | 5 | 6 | 7 | 8 | 9 | 10 | 11 | 1 | 12 | 2 | 13 | 14 | 15 |
| | Second particulate polymer | 1 | 2 | 3 | 4 | 5 | 6 | 6 | 7 | 8 | 8 | 7 | 1 | 1 | 1 | 9 | 10 | 11 | 10 | 12 | 10 | 13 |
| Used amount of second particulate polymer per 100 parts by mass of used amount of first particulate polymer [parts by mass] | | 10 | 10 | 10 | 10 | 10 | 10 | 10 | 10 | 10 | 10 | 10 | 10 | 10 | 10 | 10 | 10 | 10 | 10 | 5 | 10 | 10 |
| Value of proportion A [mass%] | | 90.9 | 90.9 | 90.9 | 90.9 | 90.9 | 85.0 | 90.9 | 90.9 | 80.8 | 75.4 | 80.6 | 90.9 | 94.9 | 75.9 | 90.9 | 90.9 | 72.9 | 90.9 | 72.9 | 0.0 | 61.5 |
| Value of proportion B [mass%] | | 93.8 | 79.9 | 84.8 | 94.0 | 93.8 | 77.8 | 77.8 | 70.1 | 73.0 | 73.0 | 70.1 | 93.8 | 93.8 | 93.8 | 93.8 | 0.0 | 73.0 | 0.0 | 73.0 | 0.0 | 62.0 |
| Value of proportion X [mass%] | | 90.9 | 90.9 | 90.9 | 90.9 | 90.9 | 90.9 | 90.9 | 90.9 | 90.9 | 90.9 | 90.9 | 90.9 | 90.9 | 90.9 | 90.9 | 90.9 | 90.9 | 90.9 | 95.2 | 90.9 | 90.9 |
| Value of proportion Y [mass%] | | 9.1 | 9.1 | 9.1 | 9.1 | 9.1 | 9.1 | 9.1 | 9.1 | 9.1 | 9.1 | 9.1 | 9.1 | 9.1 | 9.1 | 9.1 | 9.1 | 9.1 | 9.1 | 4.8 | 9.1 | 9.1 |
| Value calculated by formula (1) | | 91.2 | 89.9 | 90.3 | 91.2 | 91.2 | 84.3 | 89.7 | 89.0 | 80.1 | 75.2 | 79.6 | 91.2 | 94.8 | 77.5 | 91.2 | 82.6 | 72.9 | 82.6 | 72.9 | 0.0 | 61.5 |
| Evaluation | Adhesive strength | A | A | A | B | D | C | D | D | D | E | E | A | A | D | A | F | F | F | F | F | F |
| | Inkjet ejection characteristics | A | A | A | A | A | A | A | A | A | A | A | B | B | A | B | A | A | A | A | A | A |
| | Cycle characteristics | A | A | A | A | A | B | B | B | B | B | B | A | A | C | B | D | B | D | B | D | B |

It can be seen from the evaluation results shown in Table 3 that with the presently disclosed composition for a non-aqueous secondary battery adhesive layer, it is possible to form an adhesive layer for a non-aqueous secondary battery that strongly adheres battery members to each other even through pressing at normal temperature.

It can also be seen from the evaluation results shown in Table 3 that the presently disclosed composition for a non-aqueous secondary battery adhesive layer has excellent inkjet ejection characteristics.

It can also be seen from the evaluation results shown in Table 3 that a non-aqueous secondary battery obtained using the presently disclosed composition for a non-aqueous secondary battery adhesive layer has excellent cycle characteristics.

INDUSTRIAL APPLICABILITY

According to the present disclosure, it is possible to provide a composition for a non-aqueous secondary battery adhesive layer with which it is possible to form an adhesive layer for a non-aqueous secondary battery that strongly adheres battery members to each other even through pressing at normal temperature.

Moreover, according to the present disclosure, it is possible to provide an adhesive layer for a non-aqueous secondary battery that can strongly adhere battery members to each other even through pressing at normal temperature and also to provide a method of producing this adhesive layer for a non-aqueous secondary battery.

Furthermore, according to the present disclosure, it is possible to provide a laminate for a non-aqueous secondary battery having excellent adhesiveness of battery members to each other and also to provide a method of producing this laminate for a non-aqueous secondary battery.

Also, according to the present disclosure, it is possible to provide a non-aqueous secondary battery having excellent adhesiveness of battery members to each other.

REFERENCE SIGNS LIST

| | |
|---|---|
| 10A | first separator web |
| 20A | negative electrode web |
| 30A | second separator web |
| 40 | positive electrode |
| 50 | droplet |
| 51-54 | coating machine (nozzle head) |
| 61, 62 | pressure bonding roller |
| 70 | cutting machine |
| 91 | conveying roller |
| 92 | heating roller |
| 300 | first particulate polymer |
| 310 | core portion |
| 310S | outer surface of core portion |
| 320 | shell portion |

**Claims**

1. A composition for a non-aqueous secondary battery adhesive layer comprising: a first particulate polymer; and a second particulate polymer differing from the first particulate polymer, wherein

the first particulate polymer has a core-shell structure including a core portion and a shell portion at least partially covering an outer surface of the core portion,
a polymer of the core portion and the second particulate polymer each include a (meth)acrylate monomer unit including a chain alkyl group having a carbon number of 4 or more, and
when a proportion constituted by the (meth)acrylate monomer unit including a chain alkyl group having a carbon number of 4 or more in the first particulate polymer is taken to be A mass%, a proportion constituted by the (meth)acrylate monomer unit including a chain alkyl group having a carbon number of 4 or more in the second particulate polymer is taken to be B mass%, proportional content of the first particulate polymer among total mass of the first particulate polymer and the second particulate polymer is taken to be X mass%, and proportional content of the second particulate polymer among total mass of the first particulate polymer and the second particulate polymer is taken to be Y mass%, a value calculated by formula (1), shown below:

$$(AX + BY)/(X + Y) \cdots (1)$$

is 75 mass% or more.

2. The composition for a non-aqueous secondary battery adhesive layer according to claim 1, wherein

the polymer of the core portion has a glass-transition temperature of -20°C or lower, and
the second particulate polymer has a glass-transition temperature of -15°C or lower.

3. The composition for a non-aqueous secondary battery adhesive layer according to claim 1 or 2, wherein a polymer of the shell portion has a glass-transition temperature of 50°C or higher.

4. The composition for a non-aqueous secondary battery adhesive layer according to any one of claims 1 to 3, wherein a mass proportion of the shell portion in the first particulate polymer is not less than 2 mass% and not more than 15 mass%.

5. The composition for a non-aqueous secondary battery adhesive layer according to any one of claims 1 to 4, wherein

a proportion constituted by the (meth)acrylate monomer unit including a chain alkyl group having a carbon number of 4 or more in the polymer of the core portion is 90 mass% or more when all monomer units included in the core portion are taken to be 100 mass%, and
a proportion constituted by the (meth)acrylate monomer unit including a chain alkyl group having a carbon number of 4 or more in the second particulate polymer is 75 mass% or more when all monomer units included in the second particulate polymer are taken to be 100 mass%.

6. The composition for a non-aqueous secondary battery adhesive layer according to any one of claims 1 to 5, wherein a structural formula of the (meth)acrylate monomer unit including a chain alkyl group having a carbon number of 4 or more in the second particulate polymer is the same as a structural formula of the (meth)acrylate monomer unit including a chain alkyl group having a carbon number of 4 or more in the first particulate polymer.

7. The composition for a non-aqueous secondary battery adhesive layer according to any one of claims 1 to 6, wherein the (meth)acrylate monomer unit including a chain alkyl group having a carbon number of 4 or more in the first particulate polymer and the (meth)acrylate monomer unit including a chain alkyl group having a carbon number of 4 or more in the second particulate polymer are each a (meth)acrylate monomer unit including a chain alkyl group having a carbon number of not less than 4 and not more than 10.

8. The composition for a non-aqueous secondary battery adhesive layer according to any one of claims 1 to 7, wherein the (meth)acrylate monomer unit including a chain alkyl group having a carbon number of 4 or more in the first particulate polymer and the (meth)acrylate monomer unit including a chain alkyl group having a carbon number of 4 or more in the second particulate polymer are each an n-butyl acrylate unit.

9. The composition for a non-aqueous secondary battery adhesive layer according to any one of claims 1 to 8, wherein at least one of the first particulate polymer and the second particulate polymer further includes a nitrile group-containing monomer unit.

10. An adhesive layer for a non-aqueous secondary battery obtained using the composition for a non-aqueous secondary battery adhesive layer according to any one of claims 1 to 9.

11. A method of producing an adhesive layer for a non-aqueous secondary battery comprising:

applying the composition for a non-aqueous secondary battery adhesive layer according to any one of claims 1 to 9 onto a substrate; and
drying the composition for a non-aqueous secondary battery adhesive layer that has been applied onto the substrate.

**12.** A laminate for a non-aqueous secondary battery comprising an electrode and a separator, wherein the electrode and the separator are adhered via the adhesive layer for a non-aqueous secondary battery according to claim 10.

**13.** A method of producing a laminate for a non-aqueous secondary battery comprising:

supplying an adhesive material to an affixing surface of at least one of an electrode and a separator; and pressing and affixing the electrode and the separator via the affixing surface to which the adhesive material has been supplied, wherein
the adhesive material is obtained using the composition for a non-aqueous secondary battery adhesive layer according to any one of claims 1 to 9.

**14.** A non-aqueous secondary battery comprising the laminate for a non-aqueous secondary battery according to claim 12.

# FIG. 1

# FIG. 2

EP 4 398 402 A1

FIG. 3

## INTERNATIONAL SEARCH REPORT

| International application No. |
| --- |
| **PCT/JP2022/031438** |

### A. CLASSIFICATION OF SUBJECT MATTER

***H01M 50/403***(2021.01)i; ***H01M 4/13***(2010.01)i; ***H01M 4/139***(2010.01)i; ***H01M 50/42***(2021.01)i; ***H01M 50/443***(2021.01)i; ***H01M 50/46***(2021.01)i

FI:  H01M50/403 D; H01M4/13; H01M4/139; H01M50/42; H01M50/443 B; H01M50/443 E; H01M50/46

According to International Patent Classification (IPC) or to both national classification and IPC

### B. FIELDS SEARCHED

Minimum documentation searched (classification system followed by classification symbols)

H01M50/403; H01M4/13; H01M4/139; H01M50/42; H01M50/443; H01M50/46

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | WO 2019/188719 A1 (ZEON CORP.) 03 October 2019 (2019-10-03) | 1-14 |
| A | WO 2019/065130 A1 (ZEON CORP.) 04 April 2019 (2019-04-04) | 1-14 |
| A | JP 2017-50149 A (ASAHI KASEI CORP.) 09 March 2017 (2017-03-09) | 1-14 |

☐ Further documents are listed in the continuation of Box C.  ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **21 September 2022** | **04 October 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

International application No.

**PCT/JP2022/031438**

| Patent document cited in search report | | | Publication date (day/month/year) | Patent family member(s) | | | Publication date (day/month/year) |
|---|---|---|---|---|---|---|---|
| WO | 2019/188719 | A1 | 03 October 2019 | US | 2021/0050616 | A1 | |
| | | | | EP | 3780171 | A1 | |
| | | | | CN | 111712951 | A | |
| | | | | KR | 10-2020-0134231 | A | |
| WO | 2019/065130 | A1 | 04 April 2019 | US | 2020/0280072 | A1 | |
| | | | | EP | 3690985 | A1 | |
| | | | | CN | 111108629 | A | |
| | | | | KR | 10-2020-0060391 | A | |
| JP | 2017-50149 | A | 09 March 2017 | (Family: none) | | | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020045246 A1
- WO 2012115096 A1

- JP 2013145763 A